# FASCICULE DE BREVET EUROPEEN

(11) **EP 2 880 438 B1**
(45) Date de publication et mention de la délivrance du brevet: **27.09.2023**
(21) Numéro de dépôt: 13745095.3
(22) Date de dépôt: 05.08.2013
(51) Int. Cl.: G01N 30/72, H01J 49/40

(54) **SYSTÈME D'ANALYSE DE GAZ COMPRENANT UN SPECTROMÈTRE DE GAZ MUNI D'UN MICRO-RÉFLECTRON**
GASANALYSEVORRICHTUNG MIT EINEM EINEN MIKRO-REFLEKTRON AUFWEISENDEN MASSENSPEKTROMETER
GAS ANALYSIS SYSTEM COMPRISING A MASS SPECTROMETER PROVIDED WITH A MICRO-REFLECTRON

(30) Priorité: 03.08.2012 FR 1257606
(43) Date de publication de la demande: 10.06.2015
(73) Titulaire: Commissariat à l'Énergie Atomique et aux Énergies Alternatives, 75015 Paris (FR); Analytical Pixels Technology - Apix Technology, 38040 Grenoble Cedex 9 (FR)
(72) Inventeur: DURAFFOURG, Laurent, F-38500 Voiron (FR); ANDREUCCI, Philippe, F-38430 Moirans (FR); TASSETTI, Charles-Marie, F-75020 Paris (FR); COLINET, Eric, F-76230 Bois Guillaume (FR); PUGET, Pierre, F-30330 Saint Ismier (FR); WHITING, Joshua, Springboro, Ohio 45406 (US); STEVENS, Peter Thomas, Springboro, Ohio 45066 (US); PETITJEAN, Mélanie, F-38000 Grenoble (FR)
(74) Mandataire: Regimbeau
(86) Numéro de dépôt international: PCT/EP2013/066345
(87) Numéro de publication internationale: WO 2014/020177

(56) Documents cités:
- EP-A1- 2 485 243
- WO-A2-2009/048739
- US-A1- 2008 087 841
- CAJKA T ET AL: "Gas chromatography-high-resolution time-of-flight mass spectrometry in pesticide residue analysis: advantages and limitations", JOURNAL OF CHROMATOGRAPHY, ELSEVIER SCIENCE PUBLISHERS B.V, NL, vol. 1058, no. 1-2, 26 novembre 2004 (2004-11-26), pages 251-261, XP004638488, ISSN: 0021-9673, DOI: 10.1016/J.CHROMA.2004.07.097
- Todd T. King ET AL: "Simulation of a miniature, low-power time-of-flight mass spectrometer for in situ analysis of planetary atmospheres", Proceedings of SPIE, vol. 6959, 1 January 2008 (2008-01-01), pages 69590E-69590E-15, XP055008941, ISSN: 0277-786X, DOI: 10.1117/12.780113

## Description

### DOMAINE DE L'INVENTION

La présente invention concerne un système d'analyse de gaz comprenant une colonne de chromatographie micro-capillaire en phase gazeuse et un spectromètre de masse à temps de vol.

### ARRIERE PLAN DE L'INVENTION

La spectrométrie de masse à temps de vol (ou TOFMS, acronyme de « Time-of-Flight Mass Spectrometer » selon la terminologie anglo-saxonne) est très souvent utilisée pour l'analyse de gaz [1].

Cette technique permet de détecter les espèces présentes dans un gaz en fonction de leur temps de parcours dans une zone dite de vol libre.

A cet effet, le gaz à analyser est ionisé, ce qui permet ensuite de séparer les différentes espèces en fonction de leur rapport masse sur charge, qui est usuellement noté m/z, où m est la masse de l'ion (généralement exprimée en Daltons (Da)) et z le nombre de charges élémentaires.

Les espèces ionisées sont injectées avec une certaine vitesse dans un champ électrostatique.

Les forces qui s'exercent sur les ions modifient alors leur trajectoire en fonction du rapport masse sur charge de ceux-ci.

Le spectromètre de masse à temps de vol repose sur la mesure d'un temps de parcours spécifique à chaque espèce dans une zone dite de vol libre, qui est une zone dépourvue de champ électrostatique, dans laquelle les ions s'éloignent les uns des autres en fonction de leur rapport masse sur charge.

Les espèces les plus légères arrivent donc sur un détecteur placé à la sortie de cette zone de vol libre avant les espèces les plus lourdes ; on peut alors déduire de la valeur du temps de vol le rapport masse sur charge de chaque espèce.

Dans les spectromètres de masse conventionnels, la zone de vol libre présente une longueur de l'ordre du mètre, qui impose un encombrement très important, rendant le spectromètre de masse utilisable uniquement en laboratoire.

Depuis une dizaine d'années, différentes équipes ont proposé la miniaturisation de ces systèmes d'analyse afin de les rendre portables [2] [3].

Cependant, ces systèmes restent soit volumineux (ainsi, les « mini » spectromètres présentent une masse de plusieurs kg), soit très peu résolus en masse, étant rappelé que l'on entend par résolution en masse d'un spectromètre de masse le rapport m/Δm, où Δm est la plus faible différence de masse mesurable entre deux pics voisins, qui caractérise

l'aptitude du spectromètre à distinguer deux pics correspondant à deux espèces présentant une différence de masse Δm.

Ainsi, on observe, sur les spectromètres de masse miniaturisés, une résolution typiquement comprise entre 10 et 50 sur des masses comprises entre 1Da et 200Da, tandis que sur les spectromètres de masse à temps de vol du commerce les plus performants (mais qui présentent un encombrement de quelques m³), la résolution est de plusieurs milliers à 20 000 sur des rangs de masses de 1Da à 10 000 Da [2] [4].

Un mini-spectromètre présentant une résolution de masse moléculaire de 600 a été présenté par T.T. King, S.A. Getty, P.A. Roman, R.A. Herrero, H.H. Jones, D.M. Kahle, B. Lynch, G. Suarez, W.B. Brinckerhoff, P.R. Mahaffy, 'Simulation of a miniature, low-power time-of-flight mass spectrometer for in situ analysis of planetary atmosphères', Proceedings of SPIE, vol 6959, 1 janvier 2008, pages 69590E-69590E-15, XP55008941, ISSN: 0277-786X. Bien que ce spectromètre comporte des éléments de petite taille, ce dispositif implique un assemblage complexe de diverses pièces aboutissant à un ensemble dont les dimensions ne sont pas dans le domaine micrométrique.

Un but de l'invention est donc de concevoir un système d'analyse de gaz intégrant un spectromètre de masse à temps de vol et au moins une colonne de chromatographie en phase gazeuse, se présentant sous la forme d'un système intégré portable de petite taille (la masse visée étant de moins de 1 kg) tout en présentant une résolution raisonnable sur une gamme de mesure plus large que celle des spectromètres de masse miniaturisés existants. Un réflectron pour un spectromètre de masse adapté est décrit dans le document EP 2485 243 A1, qui fait partie de l'état de la technique au titre de l'article 54(3) CBE.

A titre indicatif, la résolution recherchée est de l'ordre de 1000 à 2000 sur un rang de masse de 0 à 2000 Da.

### BREVE DESCRIPTION DE L'INVENTION

Conformément à l'invention, il est proposé un système d'analyse de gaz selon la revendication 1 comprenant, de l'amont vers l'aval :
- un module de séparation d'au moins une partie des espèces contenues dans le gaz à analyser, comprenant au moins une colonne micro-capillaire de chromatographie en phase gazeuse, et
- un spectromètre de masse à temps de vol couplé audit module de séparation, ledit spectromètre comprenant une source d'ions adaptée pour ioniser au moins une partie desdites espèces et émettre un faisceau d'ions, et une zone de vol libre desdits ions,
ledit spectromètre de masse étant agencé dans le volume d'au moins un substrat et comprenant un micro-réflectron disposé entre la source d'ions et la zone de vol libre des ions, une paroi dudit micro-réflectron comprenant une couche en un matériau résistif adaptée pour être polarisée entre au moins deux régions de ladite couche de sorte à créer un gradient continu de champ électrostatique pour dévier la trajectoire des ions dans ledit micro-réflectron.

Dans le présent texte, le préfixe « micro » désigne un élément dont l'une au moins des dimensions est inférieure à 5 mm, de préférence inférieure à 1 mm.

Dans la suite du texte, le terme « chromatographie », s'il est employé seul, fait référence à la chromatographie en phase gazeuse.

Selon l'invention, le micro-réflectron est agencé de sorte à être parcouru par les ions dans une direction longitudinale parallèle à la direction du faisceau d'ions à la sortie de la source et la couche résistive est adaptée pour être polarisée de sorte que le gradient continu de champ électrostatique soit orienté transversalement à la trajectoire des ions dans le micro-réflectron.

Selon l'invention, le micro-réflectron comprend au moins deux électrodes de polarisation de la couche résistive, en contact avec lesdites au moins deux régions de la couche résistive, lesdites électrodes s'étendant dans la direction longitudinale du micro-réflectron, de sorte à générer dans ladite couche résistive un gradient de potentiel dans la direction transversale du micro-réflectron.

Le spectromètre de masse est agencé de sorte que la trajectoire des ions dans le spectromètre de masse soit comprise dans un canal s'étendant entre deux plans parallèles à une face principale dudit au moins un substrat, la hauteur dudit canal (correspondant à la distance entre lesdits plans) étant typiquement inférieure à 1 mm et la longueur dudit canal étant au moins dix fois supérieure à ladite hauteur.

Par ailleurs, ladite couche résistive du micro-réflectron s'étend dans un plan parallèle à une face principale dudit au moins un substrat.

Selon une forme d'exécution préférée, le faisceau d'ions est émis par la source dans une direction orthogonale à la direction d'introduction, dans le spectromètre, du gaz en provenance du module de séparation.

Par ailleurs, le spectromètre comprend, entre la source d'ions et le micro-réflectron, une zone d'accélération des ions.

Selon un mode de réalisation avantageux, car particulièrement compact, la zone d'accélération des ions et la zone de vol libre sont agencées le long d'une paroi longitudinale du micro-réflectron de sorte à être adjacentes.

Ainsi, de préférence, le micro-réflectron comprend une première ouverture communiquant avec la zone d'accélération pour l'entrée des ions dans le réflectron et une seconde ouverture communiquant avec la zone de vol libre pour la sortie des ions, lesdites première et seconde ouvertures étant adjacentes dans une même paroi du micro-réflectron.

De manière préférée, la zone d'accélération comprend deux électrodes s'étendant parallèlement à la direction du faisceau d'ions émis par la source, lesdites électrodes étant polarisables de sorte à générer un champ électrostatique apte à dévier les ions dans une direction orthogonale à celle du faisceau d'ions à la sortie de la source, pour faire pénétrer lesdits ions accélérés dans le micro-réflectron.

Lesdites électrodes de la zone d'accélération sont avantageusement polarisées par un dispositif impulsionnel, de sorte à faire entrer les ions accélérés de manière séquentielle dans le micro-réflectron.

La zone de vol libre du spectromètre est généralement une zone distincte du micro-réflectron, dépourvue de champ électrostatique.

Par ailleurs, le substrat dans le volume duquel est agencé ledit spectromètre est logé dans un boîtier étanche couplé à une pompe à vide de sorte à appliquer une dépression dans ledit boîtier.

Selon un mode de réalisation, ladite au moins une colonne micro-capillaire de chromatographie est agencée dans le volume d'au moins un substrat.

Selon un mode de réalisation, le module de séparation comprend au moins un micro ou nano-détecteur non destructif dans ladite au moins une colonne de chromatographie micro-capillaire.

Selon un mode de réalisation, le module de séparation comprend au moins deux colonnes micro-capillaires de chromatographie en phase gazeuse couplées en série et comprenant chacune une phase stationnaire différente, et un modulateur de flux pour réguler le flux de gaz successivement à travers chacune desdites colonnes.

De manière alternative, le module de séparation comprend au moins deux colonnes micro-capillaires de chromatographie en phase gazeuse couplées en série et comprenant chacune une phase stationnaire différente, chacune desdites colonnes micro-capillaires étant agencée dans le volume d'un substrat et comprenant au moins deux micro ou nano-détecteurs non destructifs agencés dans lesdites colonnes.

Selon un mode de réalisation avantageux, le système comprend, en amont du spectromètre de masse, au moins un micro ou nano-détecteur non destructif, ledit détecteur étant agencé dans un conduit de section égale à celle d'une colonne micro-capillaire de chromatographie auquel il est relié de sorte à ne pas modifier la section de passage du gaz.

Selon un mode de réalisation particulier, ledit détecteur non destructif est un nano-système électromécanique comprenant un résonateur et ledit détecteur est agencé dans le boîtier de mise en dépression du spectromètre de masse.

De manière optionnelle, le système comprend en outre, en amont du module de séparation, un circuit de préconcentration du gaz à analyser comprenant un préconcentrateur.

Un autre objet de l'invention concerne un procédé de fabrication dudit système d'analyse.

La fabrication du spectromètre de masse comprend, dans au moins un substrat, une étape de gravure d'un substrat pour former au moins une partie d'un canal pour les ions, une étape de dépôt d'une couche résistive dans une région dudit canal destinée à former le micro-réflectron, et une étape de formation d'au moins deux électrodes pour polariser ladite couche résistive de sorte à créer un gradient continu de champ électrostatique dans ledit réflectron.

Le procédé de fabrication du spectromètre peut en outre comprendre la découpe dudit au moins un substrat pour individualiser une puce comprenant le spectromètre de masse.

Par ailleurs, le procédé de fabrication du système peut comprendre la fabrication d'au moins une colonne micro-capillaire de chromatographie par gravure d'un sillon dans un substrat, fonctionnalisation dudit sillon par une phase stationnaire, puis scellement d'un capot sur ledit sillon.

Selon un mode de réalisation, le spectromètre de masse et la colonne micro-capillaire de chromatographie sont fabriqués dans des substrats distincts et l'on assemble la colonne de chromatographie et le spectromètre de masse par collage des faces principales des substrats dans lesquels ils sont formés, puis l'on découpe lesdits substrats assemblés pour individualiser une puce comprenant la colonne micro-capillaire de chromatographie et le spectromètre de masse.

Selon un autre mode de réalisation, on fabrique au moins une colonne de chromatographie par gravure d'un sillon dans le substrat dans lequel est agencée la zone de vol des ions du spectromètre de masse, fonctionnalisation dudit sillon par une phase stationnaire et scellement dudit substrat avec un autre substrat afin de fermer le canal de vol des ions et la colonne micro-capillaire de chromatographie.

### BREVE DESCRIPTION DES DESSINS

D'autres caractéristiques et avantages de l'invention ressortiront de la description détaillée qui va suivre, en référence aux dessins annexés sur lesquels :
- la figure 1 est un schéma de principe du système,
- la figure 2 est un schéma de principe d'un préconcentrateur,
- la figure 3 est un schéma d'un mode de réalisation du circuit de préconcentration de l'échantillon,
- la figure 4 illustre, sur la base de la figure 3, les flux de gaz dans le circuit de préconcentration dans la phase d'adsorption des différentes espèces présentes dans l'échantillon par le préconcentrateur,
- la figure 5 illustre, sur la base de la figure 3, les flux de gaz dans le circuit de préconcentration dans la phase de désorption des différentes espèces préalablement adsorbées par le préconcentrateur,
- les figures 6 et 7 sont respectivement des vues de dessus et en coupe d'une colonne micro-capillaire de chromatographie agencée dans le volume d'un substrat de silicium,
- la figure 8 est une vue de dessus montrant l'architecture générale du spectromètre de masse à temps de vol,
- la figure 9 est une vue en perspective des différents éléments dudit spectromètre,
- la figure 10 est une vue en perspective dudit spectromètre présenté sur un substrat support,
- la figure 11 présente la trajectoire des ions dans le spectromètre simulée par éléments finis,
- la figure 12 est une vue en perspective d'un boîtier destiné à recevoir le spectromètre de masse pour le mettre en dépression,
- les figures 13A à 13K sont des vues en coupe illustrant des étapes de fabrication du spectromètre de masse,
- la figure 14 est une vue en coupe présentant le principe de l'empilement d'un substrat portant un spectromètre de masse et d'un substrat portant une colonne micro-capillaire de chromatographie,
- les figures 15A à 15C sont des vues en coupe illustrant des étapes de fabrication du spectromètre de masse et d'une colonne micro-capillaire de chromatographie dans le volume d'un même substrat,
- la figure 16 est une vue en coupe d'une colonne micro-capillaire de chromatographie dans laquelle plusieurs détecteurs de type NEMS sont agencés,,
- la figure 17 est un schéma d'un mode de réalisation du circuit de préconcentration et de modulation, dans le cas où le module de séparation comprend deux colonnes micro-capillaires de chromatographie en phase gazeuse (GCxGC),
- la figure 18 illustre, sur la base de la figure 17, la circulation de l'échantillon gazeux en vue de l'adsorption de ses différentes espèces dans le préconcentrateur,
- la figure 19 illustre, sur la base de la figure 17, la circulation du gaz vecteur en vue de la désorption des espèces préalablement adsorbées et le passage dans la première colonne de chromatographie (première phase de modulation, dite phase de chargement de la seconde dimension),
- la figure 20 illustre, sur la base de la figure 17, la circulation du gaz vecteur en vue du passage dans la seconde colonne de chromatographie (seconde phase de modulation, dite phase d'analyse de la seconde dimension),
- la figure 21 présente les pics obtenus respectivement à la sortie de la première colonne de chromatographie (courbe A) et à la sortie des deux colonnes couplées par le modulateur (courbe B).

Pour des questions de lisibilité des figures, les différents éléments n'ont pas nécessairement été représentés à l'échelle.

### DESCRIPTION DETAILLEE DE L'INVENTION

### Architecture générale du système

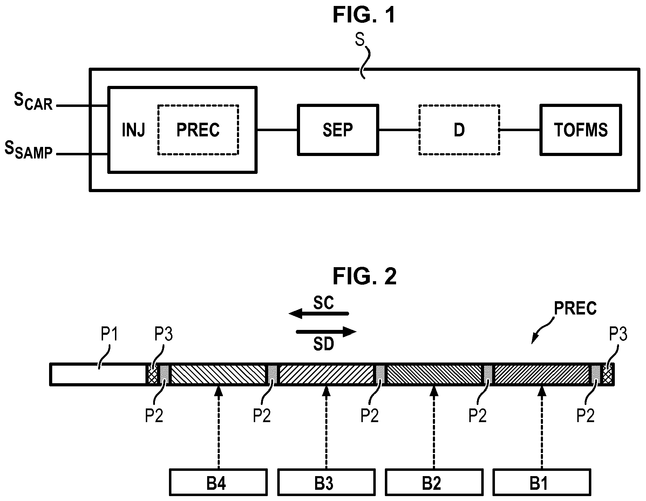

La figure 1 illustre de manière schématique et non limitative l'architecture générale du système d'analyse S.

L'échantillon à analyser se présente sous forme gazeuse et comporte une ou plusieurs espèces chimiques à mesurer.

Pour l'analyse, une quantité déterminée dudit échantillon est introduite dans un dispositif d'injection INJ qui est couplé à une source S_{CAR} d'un gaz vecteur.

Ledit gaz vecteur a pour fonction de transporter dans les différents composants du système d'analyse les espèces contenues dans l'échantillon à analyser.

Le gaz vecteur est un gaz inerte vis-à-vis de l'échantillon.

On choisit usuellement le gaz vecteur parmi les gaz suivants, purs ou en mélange : hélium, hydrogène, argon, diazote, air sec, air filtré (« scrubbed » selon la terminologie anglo-saxonne).

Le dispositif d'injection est également couplé à une source S_{SAMP} dudit échantillon.

Selon le contexte d'utilisation du système, la source S_{SAMP} de l'échantillon peut être un récipient contenant ledit échantillon (notamment lorsque l'échantillon a été prélevé au préalable et transporté afin d'être analysé) ou bien une conduite d'amenée d'un flux dynamique de l'échantillon (constituée par exemple d'une dérivation mise en place sur une installation industrielle, notamment en vue d'un contrôle en continu d'un procédé industriel).

De manière connue en elle-même, le dispositif d'injection comprend une boucle d'injection qui peut être obturée à ses deux extrémités par des valves couplées à la source de l'échantillon et à la source de gaz vecteur.

L'injection de gaz à analyser dans le système comprend tout d'abord l'introduction d'une portion de l'échantillon dans la boucle d'injection, puis l'arrêt, par les valves, de la circulation de l'échantillon suivie de l'introduction dans la boucle d'une quantité déterminée du gaz vecteur, qui entraîne la portion de l'échantillon présente dans la boucle vers le système d'analyse.

De manière optionnelle, le dispositif d'injection INJ comprend en outre un préconcentrateur PREC qui sera décrit en détail plus bas, en vue de concentrer les espèces dans le gaz à analyser.

Un tel préconcentrateur peut être nécessaire notamment lorsque l'on souhaite détecter, dans l'échantillon gazeux, des espèces présentes uniquement sous forme de traces, c'est-à-dire avec une concentration tellement faible que, compte tenu du rendement d'ionisation généralement faible du spectromètre de masse (qui est de l'ordre de quelques % actuellement), elles ne sont pas détectables par ledit spectromètre.

D'une manière générale, l'utilisation d'un préconcentrateur est souhaitable lorsque la concentration des espèces à détecter est inférieure à quelques dizaines à quelques centaines de ppb.

Lorsqu'il est présent, le préconcentrateur fait partie d'un circuit de préconcentration couplé à un module de séparation des espèces contenues dans le gaz à analyser, ledit module SEP comprenant au moins une colonne micro-capillaire GC de chromatographie en phase gazeuse.

Dans certains modes de réalisation, le module de séparation peut comprendre plusieurs colonnes micro-capillaires de chromatographie connectées de préférence en série, bien que pouvant être aussi connectées en parallèle.

Dans un tel cas, le module de séparation peut avantageusement comprendre en outre un modulateur pour gérer le flux de l'échantillon au travers de ces différentes colonnes.

De manière alternative, lesdites colonnes peuvent être pourvues d'au moins deux micro ou nano-détecteurs non destructifs qui fournissent des informations sur les instants de passage des différentes espèces dans chacune desdites colonnes.

Un exemple de module avec deux colonnes sera décrit dans l'exemple n°2 ci-dessous.

La module de séparation SEP est quant à lui couplé avec le spectromètre de masse à temps de vol TOFMS.

De manière avantageuse mais optionnelle, au moins un micro ou nano-détecteur non destructif D peut être placé en amont du spectromètre de masse TOFMS, en aval du module de séparation et/ou à l'intérieur de ladite au moins une colonne micro-capillaire de chromatographie.

Pour la conception et le couplage des différents composants du système, on veille de préférence à ce que la section de la veine fluidique dans laquelle circule le gaz à analyser soit régulière du dispositif d'injection de l'échantillon jusqu'à l'entrée du spectromètre de masse.

Ladite veine fluidique est de type micro-capillaire, c'est-à-dire qu'elle présente une section équivalente à la section d'un cercle de 1 mm ou moins de diamètre.

Par « régulière », on entend que la section de la veine ne présente pas de variations brutales et que les éventuelles variations de section n'excèdent pas 20 à 30% de la section moyenne de la veine..

En effet, tout changement significatif de section au sein de la veine fluidique serait susceptible de créer des volumes morts responsables d'une dilution du gaz, ce qui pourrait se traduire par une dispersion des espèces.

En particulier, lorsque l'on agence un micro ou nano-détecteur dans la veine fluidique parcourue par le gaz, on choisit un détecteur dont l'encombrement est adapté pour ne pas perturber la section de la veine.

Les nano-détecteurs, notamment les NEMS (acronyme du terme anglo-saxon « Nano ElectroMechanical Systems », ou systèmes électromécaniques nanométriques) ou les nano-TCD (acronyme du terme anglo-saxon «Nano Thermal Conductivity Detector » ou nano-détecteur à conductivité thermique) sont donc particulièrement bien adaptés à cette contrainte, du fait de leur petite taille.

Ceci n'exclut pas qu'un détecteur de type MEMS (« Micro ElectroMechanical System » ou microsystème électromécanique), s'il est judicieusement choisi, puisse également être utilisé sans affecter la section de la veine.

Une particularité de ce système d'analyse, qui sera développée en détail plus bas, est que le spectromètre de masse est agencé dans le volume d'au moins un substrat, de sorte que ledit spectromètre est particulièrement compact.

Par exemple, le spectromètre peut être réalisé par assemblage de deux substrats ayant au préalable été structurés de façon à former une ou plusieurs cavités et former différentes parties du spectromètre, ledit spectromètre s'étendant alors partiellement dans le volume de chacun desdits substrats.

Cette miniaturisation du spectromètre de masse avec une bonne résolution sur une gamme de mesure étendue est rendue possible par l'intégration, entre la source d'ions et la zone de vol libre, d'une région dite micro-réflectron, dont la fonction est de compenser les dispersions de l'énergie cinétique des espèces ionisées, ce qui permet d'obtenir des résultats exploitables malgré la faible longueur de la zone de vol libre.

Par substrat, on entend tout matériau se présentant par exemple sous la forme d'une plaque (ou « wafer » selon la terminologie anglo-saxonne) ou d'une puce et apte à être structuré par des techniques de micro-fabrication.

A titre d'exemple, les substrats de silicium, qu'ils soient massifs ou constitués d'un empilement de couches (comme par exemple les substrats silicium sur isolant (SOI), sont particulièrement adaptés à la réalisation d'au moins une partie du spectromètre de masse.

En effet, diverses techniques de micro-fabrication ont été mises au point pour ce matériau et sont actuellement bien maîtrisées à l'échelle industrielle, en particulier dans le domaine de la microélectronique.

Ces techniques incluent notamment des techniques de photolithographie, de gravure et de dépôt de couches permettant une structuration d'un substrat par ajout ou enlèvement de matière.

Cependant, des substrats d'autres matériaux que le silicium peuvent être employés, selon la fonction recherchée.

Par exemple, des substrats de verre, de SiC, ou d'un matériau semi-conducteur autre que le silicium, peuvent également employés pour la réalisation de certains éléments du système.

Par ailleurs, le module de séparation comprenant une ou plusieurs colonnes de section micro-capillaire, il est également très compact, de sorte que le système assemblé présente un encombrement particulièrement faible.

De manière particulièrement avantageuse mais non limitative, la ou les colonnes micro-capillaires de chromatographie peuvent également être réalisées dans le volume d'un substrat, ce qui permet de minimiser leur encombrement.

Il est alors possible de fabriquer, par des techniques de micro-fabrication, le module de séparation et le spectromètre de masse sur des substrats différents, puis d'associer ces composants par empilement des substrats ou par association de puces obtenues par découpe desdits substrats.

De manière alternative, il est possible de fabriquer, par des techniques de micro-fabrication, une colonne micro-capillaire de chromatographie et le spectromètre de masse dans le volume d'un même substrat.

Par découpe des substrats, on peut ainsi obtenir des puces portant un ou plusieurs composants du système.

On va maintenant décrire les différents composants du système d'analyse de gaz, qu'ils soient essentiels ou facultatifs.

### Circuit de préconcentration

Comme expliqué plus haut, ce circuit est optionnel et utilisé principalement lorsque les espèces à analyser sont susceptibles d'être présentes avec une faible concentration dans l'échantillon gazeux tel qu'il est injecté à l'entrée du système.

Dans ce cas, pour augmenter la quantité de matière à analyser par spectrométrie de masse, il est nécessaire d'utiliser un préconcentrateur, c'est-à-dire un dispositif permettant de fournir, à partir de l'échantillon gazeux tel que collecté, un échantillon gazeux plus concentré qui sera introduit dans le spectromètre de masse.

Dans le système d'analyse, le préconcentrateur PREC se situe en amont du module de séparation comprenant au moins une colonne micro-capillaire de chromatographie GC.

Il est couplé audit module par un circuit de préconcentration qui sera décrit en détail plus bas.

Différents types de préconcentrateurs existent actuellement sur le marché et peuvent être utilisés dans le cadre de la présente invention.

D'une manière générale, la préconcentration repose sur une étape de piégeage des espèces de l'échantillon à analyser suivie d'une étape de restitution desdites espèces en vue de l'analyse, lesdites espèces étant alors entraînées par un gaz vecteur.

Selon un mode de réalisation, le préconcentrateur est basé sur la technique d'adsorption / thermo-désorption.

Comme illustré à la figure 2, un tel préconcentrateur comprend un ou plusieurs lits adsorbants agencés à l'intérieur d'un tube métallique à paroi mince.

L'optimisation de la préconcentration pour une seule espèce ou un mélange d'espèces similaires peut être réalisée avec un seul lit adsorbant.

Cependant, en présence d'un mélange complexe contenant des espèces différentes, une préconcentration optimale requiert l'utilisation de plusieurs lits adsorbants distincts.

De tels lits ont été décrits dans [5] [6] [7] [8].

L'agencement des différents lits adsorbants les uns par rapport aux autres est important pour le fonctionnement du préconcentrateur.

En effet, si un adsorbant à forte capacité d'adsorption (dit « adsorbant fort ») est nécessaire pour piéger des espèces très volatiles, un tel adsorbant est susceptible de retenir une espèce moins volatile si fortement que sa désorption sera pratiquement impossible.

Inversement, un adsorbant à plus faible capacité d'adsorption (dit « adsorbant faible ») permet de désorber plus facilement des espèces moins volatiles, mais ne permettra pas de piéger les espèces plus volatiles.

En pratique, on dispose donc les différents lits adsorbants selon une capacité d'adsorption croissante dans le sens de circulation de l'échantillon dans la phase d'adsorption.

Ainsi, au fur et à mesure de leur passage le long du préconcentrateur, les espèces plus volatiles restent et sont adsorbées successivement, les espèces les plus volatiles étant piégées par le dernier lit, qui présente la capacité d'adsorption la plus forte.

Lorsque l'on fait passer un échantillon gazeux à analyser dans ce tube, les différentes espèces de l'échantillon s'adsorbent sur un ou plusieurs lits adsorbants en fonction de l'affinité chimique entre chaque espèce et chaque lit.

On collecte ensuite les différentes espèces adsorbées en faisant circuler dans le tube, en sens inverse du flux préalable de l'échantillon, un gaz vecteur inerte.

Après une durée ménagée pour permettre l'équilibrage du flux dans le tube suite au changement de sens, on applique au tube contenant les lits adsorbants une température appropriée pour provoquer la désorption thermique des espèces piégées et l'entraînement desdites espèces par le gaz vecteur vers le module de séparation.

A cet effet, un fil résistif isolé couplé à un capteur de température peut être enroulé autour du tube métallique contenant les lits adsorbants, et échauffé par effet Joule.

Selon une variante, on peut placer autour du tube métallique contenant les lits adsorbants un manchon chauffant.

De manière alternative, le tube métallique peut être lui-même directement chauffé par effet Joule par la circulation d'un courant électrique entre ses extrémités, afin de porter rapidement les lits adsorbants à la température de désorption souhaitée.

L'intérêt de mettre en oeuvre la désorption en faisant circuler le gaz vecteur en sens inverse du flux de l'échantillon est d'éviter tout « effet mémoire » et d'améliorer la désorption.

En effet, si la désorption avait lieu dans le même sens que l'adsorption, les espèces les moins volatiles seraient entraînées par le gaz vecteur sur les adsorbants les plus forts, où elles seraient piégées.

Dans l'exemple de la figure 2, le préconcentrateur PREC est constitué d'un tube métallique P1 contenant quatre lits adsorbants différents à base de carbone B1 à B4, séparés les uns des autres par une cloison P2 en laine de verre.

Aux extrémités du préconcentrateur sont agencées deux cloisons P3 sous forme de grilles en acier inoxydable qui maintiennent les lits en place dans le tube P1.

La flèche SC indique le sens du flux de l'échantillon dans l'étape d'adsorption (collecte des espèces) et la flèche SD, celui du flux du gaz vecteur dans l'étape de désorption (libération des espèces).

De l'amont vers l'aval dans le sens de la flèche SC, on trouve par exemple un premier lit B1, du type Carbopack^{™} Y, qui est celui qui présente la plus faible capacité d'adsorption, un deuxième lit B2 du type Carbopack^{™} B, un troisième lit B3 du type Carboapck^{™} X et un quatrième lit B4 du type Carboxen 1000, qui est celui qui présente la plus forte capacité d'adsorption.

Dans cet exemple, le diamètre intérieur du tube P1 est de 1 mm ou moins et la masse de chacun des lits adsorbants est de l'ordre de 2 mg.

Dans l'étape d'adsorption, le débit de l'échantillon est de l'ordre de 50 à 100 ml/min, à une température de 25°C.

Dans l'étape de désorption, le débit du gaz vecteur est de l'ordre de 0,8 à 1,5 ml/min à une température de 280 à 350°C, pendant 30 à 180 secondes.

Naturellement, on pourra choisir tout autre type de préconcentrateur sans pour autant sortir du cadre de la présente invention.

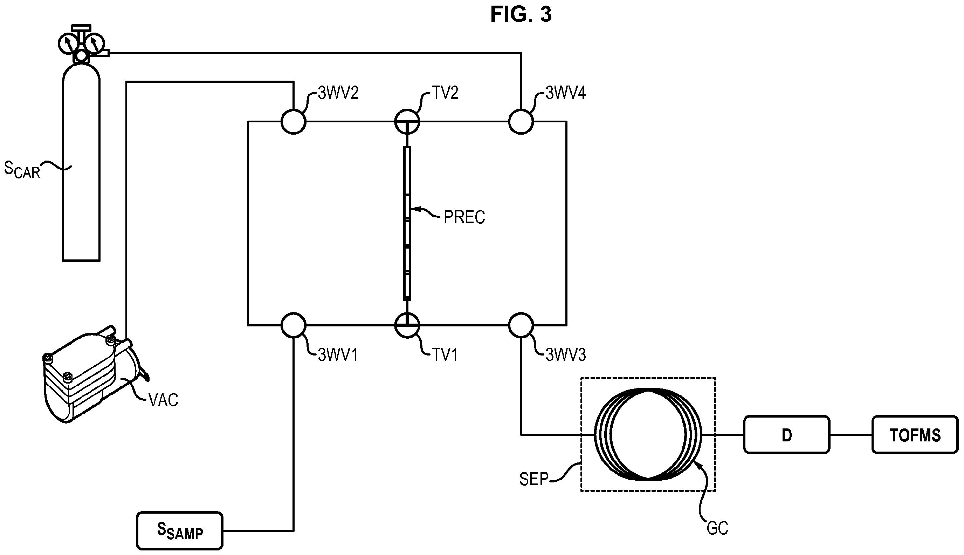

La figure 3 illustre de manière schématique un mode de réalisation du circuit de préconcentration reliant la source S_{SAMP} de l'échantillon à analyser, la source S_{CAR} de gaz vecteur et le préconcentrateur PREC proprement dit à l'entrée du module de séparation SEP.

Dans l'exemple illustré, le module de séparation comprend une unique colonne micro-capillaire de chromatographie GC, mais il pourrait également comprendre plusieurs colonnes couplées en série.

Ce circuit comprend quatre vannes 3 voies 3WV1 à 3WV4 et deux vannes en T à volume mort nul TV1 et TV2, qui sont agencées de sorte à répartir les flux de l'échantillon gazeux et du gaz vecteur dans le système en fonction des étapes d'adsorption et de désorption.

L'homme du métier est en mesure de sélectionner, parmi les vannes présentes sur le marché, les vannes appropriées.

Par exemple, des vannes 3 voies sont commercialisées par la société Neptune Research Inc. sous la référence HP161031, tandis que des vannes en T à volume mort nul traitées par Sulfinert^{™} sont disponibles auprès de la société Restek sous la référence 22534.

Les deux vannes en T à volume mort nul TV1 et TV2 sont placées aux deux extrémités du préconcentrateur PREC, la première vanne TV1 étant située en amont dudit préconcentrateur dans le sens du flux d'échantillon dans la phase d'adsorption (et par conséquent en aval dans le sens du flux du gaz vecteur dans la phase de désorption) tandis que la seconde vanne TV2 est située en aval dudit préconcentrateur dans le sens du flux d'échantillon dans la phase d'adsorption (et par conséquent en amont dans le sens du flux du gaz vecteur dans la phase de désorption).

Une première vanne 3 voies 3WV1 est reliée à la source de l'échantillon, à une branche conduisant à une deuxième vanne 3 voies 3WV2 et à la première vanne en T TV1.

La deuxième vanne 3 voies 3WV2 est quant à elle en liaison fluidique avec une pompe à vide VAC et avec la seconde vanne en T TV2.

La troisième vanne 3 voies 3WV3 est en liaison fluidique avec la première vanne en T TV1, la colonne de chromatographie GC et la quatrième vanne 3 voies 3WV4.

Cette quatrième vanne 3WV4 est quant à elle en liaison fluidique avec la source S_{CAR} de gaz vecteur et la seconde vanne en T TV2.

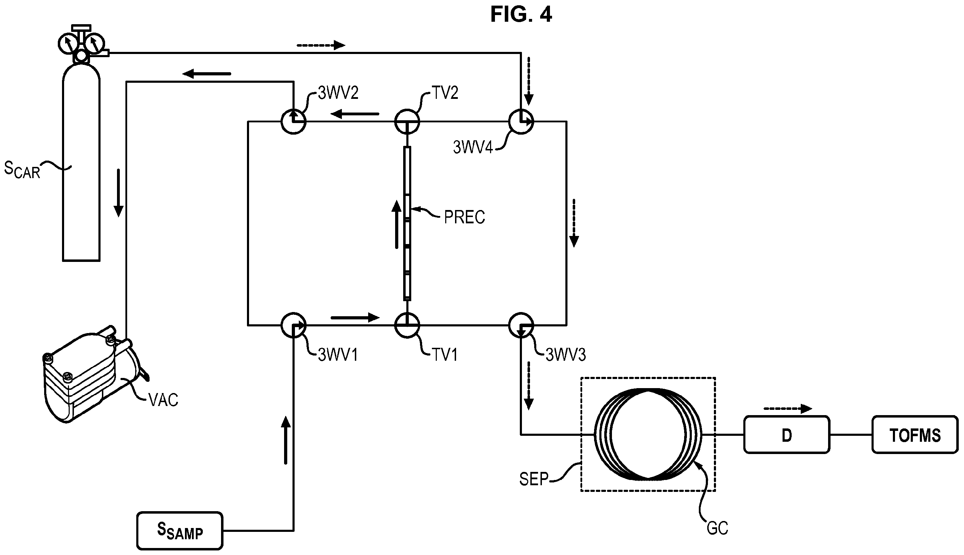

La figure 4 illustre les flux de gaz dans le circuit de préconcentration lors de la phase d'adsorption.

Les flèches à trait plein schématisent le flux de l'échantillon ; les flèches à trait pointillé schématisent le flux du gaz vecteur.

Dans cette phase, l'ouverture des vannes 3 voies 3WV1 à 3WV4 et des vannes en T TV1 et TV2 est commandée de sorte à permettre l'extraction, par la pompe VAC, de l'échantillon à partir de sa source S_{SAMP} et son passage à travers le préconcentrateur PREC (dans le sens de la première vanne en T TV1 vers la seconde vanne en T TV2, c'est-à-dire le sens de la flèche SC sur la figure 2) pour permettre l'adsorption de ses espèces.

L'homme du métier est à même de déterminer le volume d'échantillon à faire passer dans le préconcentrateur en fonction du système particulier employé.

Ce volume est typiquement piloté par la durée de la phase d'adsorption.

La température des lits adsorbants a également un impact sur l'efficacité de la préconcentration.

De manière avantageuse, le préconcentrateur est conçu de sorte à permettre une adsorption efficace à température ambiante (25°C).

Simultanément, l'ouverture des vannes 3 voies est commandée de sorte à permettre la circulation du gaz vecteur depuis sa source S_{CAR} vers l'entrée de la colonne de chromatographie, de manière isolée du flux de l'échantillon.

Dans cette phase, le gaz vecteur inerte traverse également la colonne micro-capillaire de chromatographie GC, le cas échéant, le micro ou nano-détecteur D et le spectromètre de masse TOFMS, sans que des mesures soient effectuées.

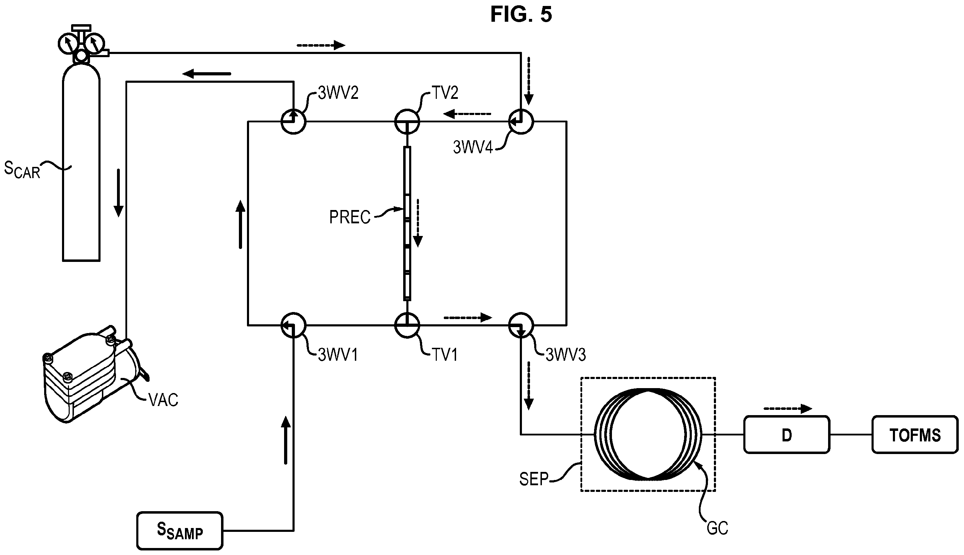

La figure 5 illustre les flux de gaz dans le circuit de préconcentration lors de la phase de thermo-désorption.

Dans cette phase, l'ouverture des vannes 3 voies et des vannes en T est commandée de sorte à dévier l'échantillon du préconcentrateur PREC et à permettre le passage du gaz vecteur dans ledit concentrateur.

Lorsque l'échantillon provient d'une source S_{SAMP} dynamique, l'échantillon est aspiré par la pompe VAC, qui fonctionne alors continument pendant les deux étapes de préconcentration.

Lorsque la source S_{SAMP} de l'échantillon est un récipient, la pompe VAC est de préférence arrêtée pendant l'étape de désorption, pour conserver dans le récipient la partie non prélevée de l'échantillon. Dans ce cas, aucune extraction de l'échantillon n'a lieu pendant la phase de thermo-désorption.

Simultanément, l'ouverture des vannes 3 voies et des vannes en T est commandée de sorte à permettre la circulation du gaz vecteur depuis sa source S_{CAR} à travers le préconcentrateur PREC (dans le sens de la seconde vanne en T TV2 vers la première vanne en T TV1, c'est-à-dire dans le sens de la flèche SD sur la figure 2), en vue de la désorption des espèces de l'échantillon piégées lors de la phase d'adsorption, le flux du gaz vecteur étant toujours isolé du flux de l'échantillon.

Dans cette phase, le gaz vecteur contenant les espèces de l'échantillon, avec des concentrations plus élevées que dans l'échantillon initial, traverse alors la colonne de chromatographie GC, le cas échéant, le micro ou nano-détecteur D et le spectromètre de masse TOFMS, afin de permettre la réalisation des mesures.

### Module de séparation

Le module de séparation comprend au moins une colonne micro-capillaire de chromatographie en phase gazeuse.

Ladite colonne micro-capillaire de chromatographie peut être formée, de manière conventionnelle, par un tube réalisé en un matériau chimiquement inerte, par exemple un tube de silice.

Ladite colonne présente une section équivalente à la section d'un cercle ayant par exemple un diamètre compris entre 10 µm à quelques centaines de micromètres, voire jusqu'à 1 mm ou légèrement davantage.

La longueur de la colonne est par exemple comprise entre 0,2 m et quelques mètres.

Pour conférer à la colonne un encombrement limité, le tube micro-capillaire peut être enroulé sur un mandrin, le diamètre dudit mandrin devant être suffisant pour éviter toute rupture du tube.

De manière alternative, la colonne micro-capillaire peut être réalisée dans le volume d'un substrat, par exemple un substrat de silicium.

Un procédé de fabrication d'une telle colonne est décrit plus bas.

Quelle que soit sa forme de réalisation, la surface intérieure de la colonne micro-capillaire est recouverte d'un film fin d'un matériau appelé phase stationnaire.

Le dépôt d'un tel matériau peut être effectué par tout type de technique connue de l'homme du métier, telle qu'un dépôt en phase liquide ou un dépôt en phase gazeuse (notamment par dépôt chimique en phase vapeur (CVD), dépôt physique en phase vapeur (PVD) ou pulvérisation (« sputtering »)).

Le matériau de la phase stationnaire peut être par exemple un polymère, tel que le polyéthylène glycol ou le polydiméthylsiloxane.

Ce matériau peut également être un solide poreux, un sol gel, ou un liquide.

Les différentes espèces de l'échantillon injecté vont se séparer suivant leurs affinités avec la phase stationnaire, certaines espèces étant plus ralenties que d'autres, ce qui va permettre de mesurer le signal émis par les différentes molécules en vue de les identifier.

Pour une colonne donnée, une espèce est définie par un coefficient ou facteur de rétention usuellement noté k.

Ce facteur de rétention correspond au rapport entre la masse de l'espèce dans la phase mobile sur la masse de l'espèce dans la phase stationnaire. C'est aussi le rapport entre :
- la différence des durées de transit respectives de l'espèce et du solvant,
- et la durée de transit du solvant (ici, le gaz vecteur), qui n'a pas d'interaction avec la colonne, dans la colonne.

Une espèce ayant un fort facteur de rétention correspond à une espèce fortement ralentie, ayant une forte affinité avec la phase stationnaire de la colonne.

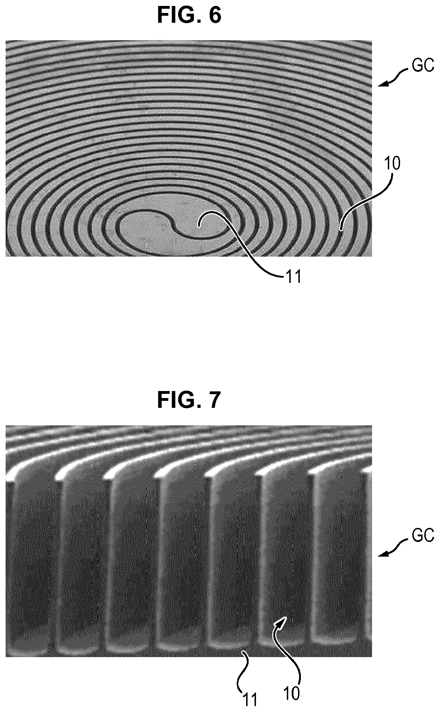

Sur les figures 6 et 7, est représenté vu de dessus et en coupe longitudinale un exemple de réalisation d'une colonne micro-capillaire de chromatographie GC en forme de deux spirales enroulées l'une dans l'autre.

Cette colonne est réalisée en gravant un sillon 10 dans un substrat 11 plan, par exemple de silicium, par des techniques classiques de microélectronique associant des étapes de photolithographie et de gravure profonde.

Sur une surface de quelques centimètres carrés, on peut ainsi réaliser une colonne :
- dont la section est déterminée par la profondeur de gravure et la largeur de la gravure. Chacune de ces dimensions peut varier d'une dizaine à quelques centaines de microns,
- dont la longueur peut aller de quelques dizaines de centimètres à un ou plusieurs mètres, par exemple deux mètres.

La forme en spirale permet d'assurer que le rayon de courbure minimal soit suffisamment grand pour minimiser la dispersion des bandes d'élution dans les conditions de flux mises en oeuvre lors de la séparation.

Cependant, le sillon pourra suivre un parcours autre que celui d'une spirale.

Une fois recouvert de la phase stationnaire, le sillon gravé dans le substrat 11 est refermé par un capot (non illustré ici).

Ledit capot est par exemple réalisé en silicium, en silice ou en verre (par exemple Pyrex^{®}), le cas échéant recouvert de la phase stationnaire.

La solidarisation du capot sur le substrat est obtenue par une méthode connue de la microélectronique classique, par exemple par scellement moléculaire ou scellement anodique.

On peut également envisager de coller le capot sur le substrat au moyen d'une colle déposée par sérigraphie ou au moyen d'un film sec (résine, par exemple Ordyl^{™}).

De manière particulièrement avantageuse, une pluralité de colonnes micro-capillaires sont formées sur un substrat de manière collective.

On entend par là que l'on réalise simultanément, sur un substrat qui se présente typiquement sous la forme d'une plaque de 200 mm de diamètre, une pluralité de sillons distincts répartis de manière régulière sur la surface de la plaque, puis l'on dépose simultanément sur les parois de l'ensemble desdits sillons la phase stationnaire choisie.

La profondeur des sillons est généralement contrôlée par la durée de la gravure.

Une forme d'exécution particulière peut consister à utiliser une plaque SOI (acronyme du terme anglo-saxon « Silicon On Insulator », ou silicium sur isolant), c'est-à-dire constituée d'une couche active de silicium, une couche d'oxyde de silicium enterrée de quelques µm d'épaisseur et une couche support de silicium présentant l'épaisseur souhaitée pour la profondeur de la colonne (typiquement, quelques centaines de µm).

Les sillons peuvent ainsi être gravés dans la couche support de silicium, la couche d'oxyde enterrée formant une couche d'arrêt de gravure, ce qui permet de maîtriser la profondeur de l'ensemble des sillons.

Un exemple de dépôt de phase stationnaire PDMS ou PEG est décrit dans [10].

Ensuite, on referme les sillons en solidarisant sur la plaque formant le substrat une plaque formant capot et présentant typiquement le même diamètre que le substrat.

De manière alternative, il est possible de procéder à un report individuel des capots sur chaque sillon ainsi gravé.

Après cet assemblage, on individualise par découpe des puces contenant chacune une colonne de chromatographie.

Selon un exemple de mise en oeuvre, le sillon 10 présente une section rectangulaire de 30 µm de largeur par 685 µm de profondeur, mais il va de soi que ces valeurs sont données à titre uniquement indicatif.

### Spectromètre de masse

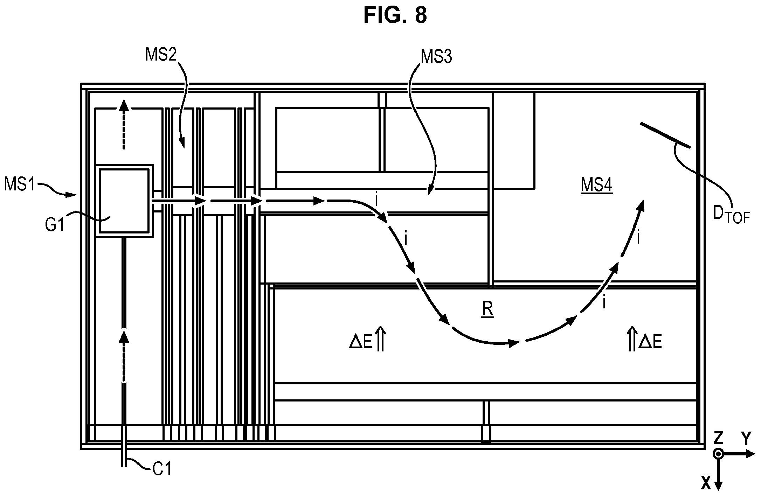

La figure 8 présente, en vue de dessus, l'architecture du spectromètre de masse à temps de vol TOFMS, sur laquelle la trajectoire des ions est schématisée par les flèches i.

Ledit spectromètre comprend plusieurs zones qui, de l'amont vers l'aval, sont les suivantes :
- une chambre MS1 d'ionisation des espèces préalablement séparées par la colonne de chromatographie, l'entrée du gaz dans ladite chambre en provenance du module de séparation étant réalisée par un tube micro-capillaire C1,
- une zone MS2 de focalisation ionique, la chambre MS1 et la zone de focalisation MS2 formant ensemble une entité dite source d'ions,
- une zone MS3 d'accélération des ions,
- un micro-réflectron, R dans lequel règne un gradient de champ électrostatique ΔE transversal à la trajectoire des ions, permettant de modifier la trajectoire des ions en amont de la zone de vol libre,
- une zone MS4 de vol libre (ou « drift » selon la terminologie anglo-saxonne), qui est une zone dépourvue de champ électrostatique,
- à l'extrémité de la zone de vol libre MS4, un ou plusieurs détecteurs d'ions D_{TOF}.

Les différentes zones dudit spectromètre de masse présentent la particularité d'être agencées dans le volume d'un substrat, grâce à des techniques de micro-fabrication employées notamment dans le domaine de la microélectronique.

### Source d'ions

Le gaz vecteur entraînant les espèces à analyser est introduit dans le spectromètre de masse par un tube micro-capillaire C1 reliant le module de séparation et l'entrée de la chambre d'ionisation MS1, le flux du gaz étant selon orienté selon l'axe x.

Selon un mode de réalisation, l'ionisation est réalisée par bombardement électronique des espèces gazeuses, le gaz vecteur n'étant quant à lui sensiblement pas ionisé.

Les électrons sont par exemple émis par un filament de tungstène chauffé (émission par thermo-ionisation) et accélérés avec une énergie de 70 eV par un champ électrostatique appliqué entre une grille G1 agencée dans la chambre d'ionisation MS1 pour attirer les électrons et le filament chauffé.

Cette énergie de 70 eV permet d'atteindre le rendement d'ionisation optimal des espèces gazeuses.

Pour éviter d'endommager par la température élevée du filament de tungstène, la puce de silicium dans laquelle est fabriqué le spectromètre de masse, il peut être nécessaire d'interposer un écran thermique entre le filament et la paroi de la puce.

De manière alternative, au lieu du filament de tungstène, l'émission des électrons peut être réalisée par une source froide de type galette de microcanaux (ou « Micro Channel Plate » (MCP) selon la terminologie anglo-saxonne).

Ces galettes sont connues en elle-même et ne seront donc pas décrites en détail ici.

Ces galettes peuvent avantageusement être découpées à la dimension voulue, c'est-à-dire de préférence celle de la chambre d'ionisation, et ne sont pas volumineuses.

De préférence, les ions sortent de la chambre d'ionisation MS1 dans une direction (ici, selon l'axe y) orthogonale à la direction d'entrée du gaz, ce qui permet d'augmenter la sensibilité et la résolution du système, par rapport à une injection directe, c'est-à-dire selon la direction d'entrée du gaz dans le spectromètre.

Le gaz vecteur présentant un rendement d'ionisation négligeable, il n'est quant à lui pratiquement pas dévié et est évacué dans l'axe de l'entrée du spectromètre de masse, c'est-à-dire selon l'axe x (le flux de gaz est schématisé, sur cette figure, par une flèche à trait pointillé).

En injectant les ions dans une direction perpendiculaire à la direction du flux du gaz vecteur, on évite que celui-ci ne perturbe la trajectoire des ions dans la partie aval du spectromètre ; on obtient donc un système de mesure plus stable.

Une telle injection orthogonale est obtenue par l'application de potentiels adaptés aux électrodes de la chambre d'ionisation et de la chambre de focalisation.

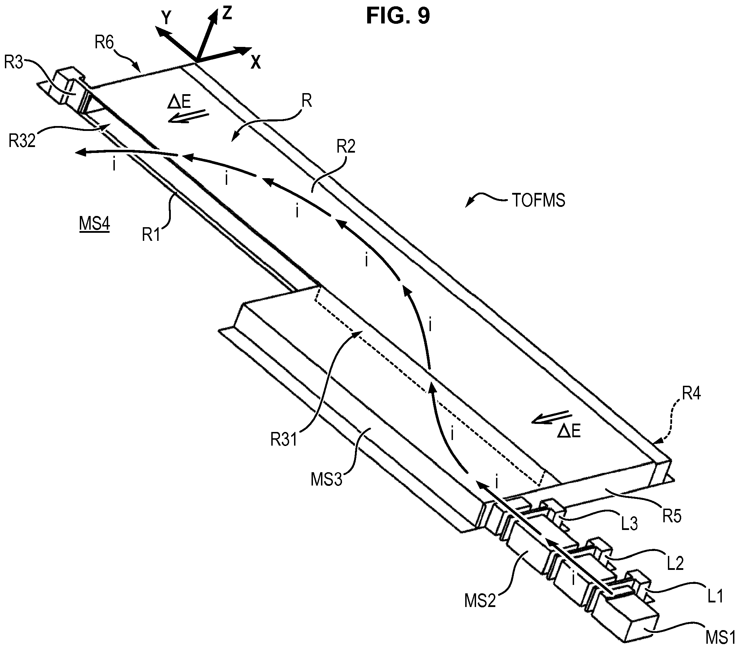

Les ions passent de la chambre d'ionisation MS1 à la chambre de focalisation MS2 qui comprend un dispositif connu constitué de lentilles électrostatiques dites de Einzel, signalées par les repères L1 à L3 sur la figure 9, permettant de focaliser tous les ions selon un faisceau de section donnée avec des vecteurs vitesse colinéaires.

Par exemple, la tache de diffraction dudit faisceau focalisé est de l'ordre de 100 µm ou moins à l'entrée de la zone d'accélération MS3.

### Zone d'accélération

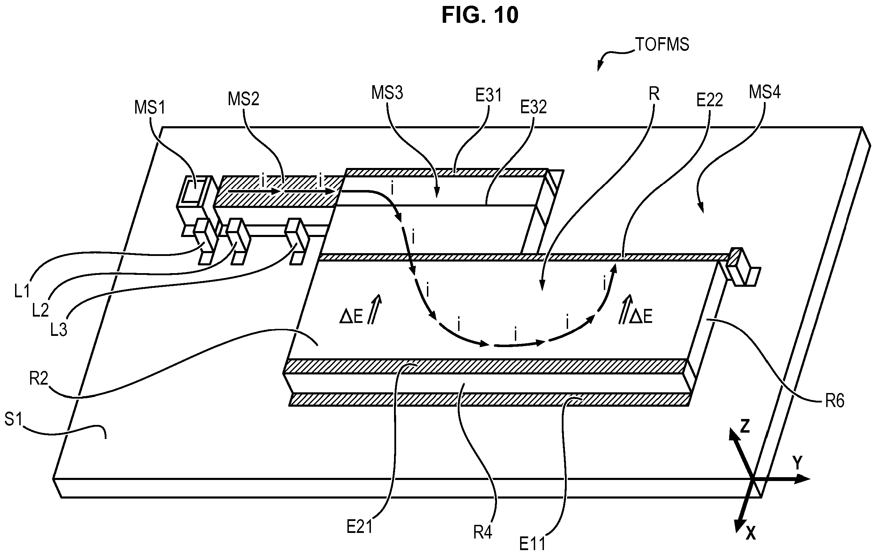

L'accélération des ions est obtenue entre deux électrodes (désignées par les repères E31 et E32 sur la figure 10), s'étendant parallèlement à la direction y du faisceau d'ions produit par la source MS1, MS2.

On applique entre lesdites électrodes, qui sont typiquement séparées d'un intervalle de quelques mm, une tension de quelques dizaines de volts, par exemple 20V, afin de procurer une vitesse nominale supérieure à celle du mouvement brownien.

Ceci correspond à une énergie de quelques mJ à quelques dizaines de mJ par exemple.

La polarisation des électrodes a pour effet de dévier les ions provenant de la source en les repoussant selon une direction sensiblement orthogonale (c'est-à-dire ici, selon l'axe x), afin de les diriger vers le micro-réflectron R.

De manière particulièrement avantageuse, lesdites électrodes sont polarisées de manière impulsionnelle, de sorte à injecter de manière séquentielle les espèces ionisées dans la partie aval du spectromètre destinée à la détection.

En d'autres termes, les ions n'entrent dans la partie aval du spectromètre que pendant les durées de polarisation desdites électrodes E31, E32.

Grâce à cette polarisation impulsionnelle des électrodes, on réalise un échantillonnage temporel du pic d'élution provenant du module de séparation en effectuant des analyses spectrométriques sur une série d'intervalles très petits devant la durée du pic (10 fois à 1000 fois plus courts par exemple). On reconstruit de la sorte le pic d'élution intervalle par intervalle.

De manière alternative, on peut employer d'autres moyens, par exemple des dispositifs électromécaniques placés en amont de la source (tels que des électrovannes rapides qui sont usuellement utilisées dans les spectromètres de masse), pour effectuer une telle segmentation temporelle.

Cependant, l'utilisation d'électrodes commandées en impulsion permet d'aboutir à des fréquences d'échantillonnage bien plus élevées que celles des dispositifs électromécaniques.

### Micro-réflectron

Le spectromètre de masse comprend un micro-réflectron permettant, grâce à un gradient de champ électrostatique orienté transversalement à la trajectoire des ions, d'augmenter la durée du parcours des ions et de compenser la dispersion cinétique des ions due aux imperfections de la source d'ions, ce qui est indispensable pour préserver une bonne résolution dans un spectromètre de masse de petites dimensions dans lequel les dispersions temporelles et spatiales ne peuvent être négligées.

Grâce à un tel micro-réflectron, on passe d'un pouvoir de résolution de 50 à un pouvoir de résolution de 2000.

En effet, si l'on considère des ions d'une masse donnée, les ions les plus énergétiques ont une trajectoire plus longue que les ions moins énergétiques, de sorte qu'en l'absence du micro-réflectron, des ions de même masse parviendraient au détecteur D_{TOF} à des instants différents.

Le micro-réflectron possède en revanche un plan focal temporel, dans lequel tous les ions de même masse arrivent en même temps, quelle que soit leur énergie initiale.

La figure 9 est une vue en perspective des volumes des différents éléments du spectromètre de masse TOFMS, ne faisant pas apparaître le substrat sur lequel ils sont formés ni les différentes électrodes permettant d'appliquer les potentiels nécessaires au fonctionnement des différentes zones du spectromètre de masse.

Le volume intérieur de ces différents éléments forme un canal de circulation (ou vol) des ions.

La face principale dudit substrat est parallèle au plan (x, y), la direction z définissant l'épaisseur des différents éléments.

Sur toutes les figures, le repère (x, y, z) est orienté de la même manière que sur la figure 8.

Le micro-réflectron R présente une forme générale tubulaire de section rectangulaire dont les faces sont désignées par les repères R1 à R6.

Comme on le verra plus bas, certaines de ces faces peuvent être des surfaces matérielles continues, formant des parois, ou bien des parois ajourées comprenant une ou des ouvertures, par exemple pour permettre le passage des ions.

La direction longitudinale du micro-réflectron est définie par la plus grande dimension dudit micro-réflectron.

Le micro-réflectron R comporte deux faces principales opposées R1, R2 parallèles à la face principale du substrat, c'est-à-dire au plan (x, y) et s'étendant longitudinalement dans la direction y.

Le micro-réflectron R comporte également deux faces longitudinales R3 et R4 parallèles au plan (y, z) et perpendiculaires aux faces principales R1 et R2.

Les deux extrémités du tube formant le micro-réflectron sont définies par deux faces transversales R5, R6 parallèles au plan (x, z).

A titre indicatif, la longueur du micro-réflectron, qui est définie par la dimension des faces R1, R2 selon l'axe y, peut être de l'ordre de 1 à 3 cm ; la largeur du réflectron, qui correspond à la dimension des faces R5, 56 selon l'axe x, peut être de l'ordre de 1 mm, et l'épaisseur du réflectron, qui correspond à la dimension des faces R3, R4 selon l'axe z, est comprise entre 400 µm et 1 mm.

La face longitudinale R3 comporte une première ouverture R31 pour l'entrée des ions provenant de la zone d'accélération MS3, et une seconde ouverture R32 pour la sortie des ions vers la zone de vol libre MS4.

En d'autres termes, la zone de vol libre MS4 est adjacente à la zone d'accélération MS3, lesdites zones étant agencées le long de la paroi longitudinale R3 du micro-réflectron R.

La trajectoire d'un ion dans le spectromètre de masse est représentée par les flèches i.

Dans la chambre d'ionisation MS1 et la zone de focalisation MS2, les ions circulent dans la direction y, qui, comme expliqué plus haut, est la direction orthogonale à laquelle le gaz a été introduit dans le spectromètre de masse (le tube micro-capillaire C1 n'a pas été représenté sur cette figure mais il est agencé en amont de de la chambre d'ionisation MS1 selon l'axe x.)

Dans la zone d'accélération MS3, les ions sont de préférence déviés pour être injectés dans le micro-réflectron dans une direction sensiblement orthogonale à leur direction dans la source MS1, MS2, c'est-à-dire dans la direction x.

Les ions accélérés dans la zone MS3 entrent dans le micro-réflectron R par la première ouverture R31 de la face longitudinale R3.

En pratique, lors de leur entrée dans le micro-réflectron, la trajectoire des ions présente un angle par rapport à l'axe x, de sorte que leur vecteur vitesse comporte à la fois une composante selon l'axe x et une composante selon l'axe y.

La trajectoire des ions dans le micro-réflectron s'effectue dans la direction longitudinale, c'est-à-dire parallèle à l'axe y et à la direction selon laquelle les ions sortent de la source MS1, MS2.

Sous l'effet du gradient de champ électrostatique régnant dans le micro-réflectron (qui est schématisé par la double flèche ΔE) dans la direction transversale à la trajectoire des ions dans le réflectron, la composante du vecteur vitesse selon l'axe x s'inverse progressivement, de sorte que les ions parcourent le réflectron dans la direction longitudinale y tout en se dirigeant d'abord vers la face R4 opposée à la face R3 par laquelle ils sont entrés, puis en s'éloignant de ladite face R4 sous l'effet de la force répulsive générée par le gradient de champ ΔE.

A cet égard, il importe peu que la face R4 soit une paroi pleine ou évidée, dans la mesure où c'est le gradient de champ électrostatique ΔE qui empêche les ions de sortir du réflectron dans la direction x.

Lors de leur parcours dans le réflectron, les ions arrivent ensuite au niveau de la seconde ouverture R32 de la face R3, à travers laquelle ils entrent dans la zone de vol libre MS4.

Dans un tel micro-réflectron, le gradient de champ électrostatique est généré par la polarisation de la couche résistive formée sur la face R1, qui est adaptée pour être polarisée entre au moins deux régions, par exemple au moyen d'électrodes placées en contact avec lesdites régions.

Par « résistif » on entend un matériau dont la résistivité électrique est d'au moins 1 kOhm.cm.

Par exemple, la couche résistive peut être formée de silicium amorphe, voire de silicium polycristallin, et est en outre faiblement dopée (c'est-à-dire avec une concentration en dopant inférieure à 10¹⁹ cm⁻³), pour améliorer le contact électrique avec des électrodes métalliques qui permettent de la polariser.

Par ailleurs, ladite couche est localement fortement dopée (c'est-à-dire avec une concentration en dopant supérieure à 10¹⁹ cm⁻³) pour obtenir un contact ohmique avec les électrodes métalliques qui permettent de la polariser,

Ladite couche résistive s'étend parallèlement à la trajectoire des ions dans le micro-réflectron.

De manière particulièrement avantageuse, la couche résistive sur la face R1 forme une paroi plane, c'est-à-dire sans protubérances vers l'intérieur du micro-réflectron, et lisse, c'est-à-dire présentant typiquement une rugosité inférieure à 1 µm RMS.

Ainsi, ladite paroi n'engendre aucune perturbation de la trajectoire des ions malgré la très faible section du canal de vol.

En particulier, les électrodes qui permettent de polariser la couche résistive sont avantageusement disposées à l'extérieur du micro-réflectron.

Pour faciliter la compréhension de la figure 9, les électrodes du micro-réflectron R et des zones MS1 à MS3 en amont de celui-ci n'ont pas été représentées.

Ces électrodes sont en revanche schématisées par des hachures sur la figure 10, qui est une vue en perspective des éléments du spectromètre de masse TOFMS.

Les éléments du spectromètre de masse sont ici représentés sur un substrat S1, qui est par exemple un substrat de verre.

Sur la figure 10, la face principale R1, opposée à la face principale R2, n'est pas visible.

C'est sur cette face R1 qu'est formée la couche résistive mentionnée plus haut.

Cette couche est polarisable au moyen de deux électrodes longitudinales, s'étendant selon l'axe y et placées le long des deux côtés longitudinaux de ladite couche.

Dans le mode de réalisation illustré ici, le premier côté longitudinal de la couche résistive correspond à l'intersection avec la face longitudinale R3 et le second côté longitudinal correspond à l'intersection avec la face longitudinale R4.

La distance entre lesdites électrodes est donc au plus égale à la largeur de la couche résistive, de sorte à polariser la couche résistive sur toute sa largeur ; cependant, il serait possible de rapprocher lesdites électrodes, de sorte à ne polariser que la portion de la couche résistive comprise entre lesdites électrodes, ou encore d'insérer une ou plusieurs électrodes supplémentaires parallèles, ce qui permettrait de choisir la portion de la couche résistive à polariser.

Sur la figure 10, seule l'électrode E11, placée le long du second côté longitudinal de la couche résistive, est visible. Néanmoins, une autre électrode s'étend, parallèlement à l'électrode E11, le long du premier côté longitudinal de ladite couche résistive.

Lesdites électrodes de polarisation de la couche résistive sont avantageusement agencées entre le substrat S1 et la couche résistive de la face R1, c'est-à-dire à l'extérieur du micro-réflectron R, de sorte qu'elles ne débouchent pas dans le volume intérieur du micro-réflectron.

Lorsque l'on applique une tension entre lesdites électrodes, on crée un gradient continu de potentiel dans la couche résistive, qui génère un gradient de champ électrostatique dans le volume du micro-réflectron ainsi que dans la couche résistive elle-même du fait de la loi d'Ohm, dans la direction opposée à la trajectoire x des ions à leur entrée dans le micro-réflectron.

Sous l'effet de ce gradient de champ électrostatique, les ions circulant dans le micro-réflectron R sont ralentis puis changent de trajectoire en s'éloignant de la paroi R4.

La face R2 opposée à la couche résistive de la face R1 forme également une paroi continue, sur laquelle sont agencées deux électrodes E21, E22 s'étendant parallèlement aux électrodes de polarisation de la couche résistive de la face R1, le long des deux côtés longitudinaux de la paroi R2.

Ces électrodes permettent, en combinaison avec les électrodes de polarisation de la couche résistive de la face R1, de confiner le champ électrique dans le micro-réflectron.

Selon un mode préféré de réalisation, les faces autres que la face R1 sont généralement des parois en un matériau présentant une résistivité électrique plus faible que celle de la couche résistive ; ledit matériau moins résistif est choisi de sorte que les parois formées de ce matériau présentent une résistance électrique globale du même ordre de grandeur que la résistance de la couche résistive, compte tenu de la différence d'épaisseur entre la couche résistive qui est sensiblement plus mince (à titre indicatif, de l'ordre de 100 à 500 nm, par exemple 200 nm) que les parois des faces R2 à R6 du réflectron (dont l'épaisseur est de l'ordre de 100 µm).

Par exemple, les parois du micro-réflectron autres que la couche résistive de la face R1 peuvent être formées de silicium présentant une résistivité de l'ordre de quelques Ohm.cm.

La distance entre les électrodes de polarisation de la couche résistive et la tension de polarisation sont dimensionnées pour obtenir une compensation correcte de la dispersion pour les ions présentant la masse la plus grande.

Ce dimensionnement peut se faire au moyen d'un logiciel de simulation, par exemple le logiciel ANSYS, qui simule la trajectoire des ions selon une méthode par éléments finis. D'autres logiciels tels que SIMION, qui est dédié au calcul de trajectoires de particules massiques chargées) peuvent être utilisés.

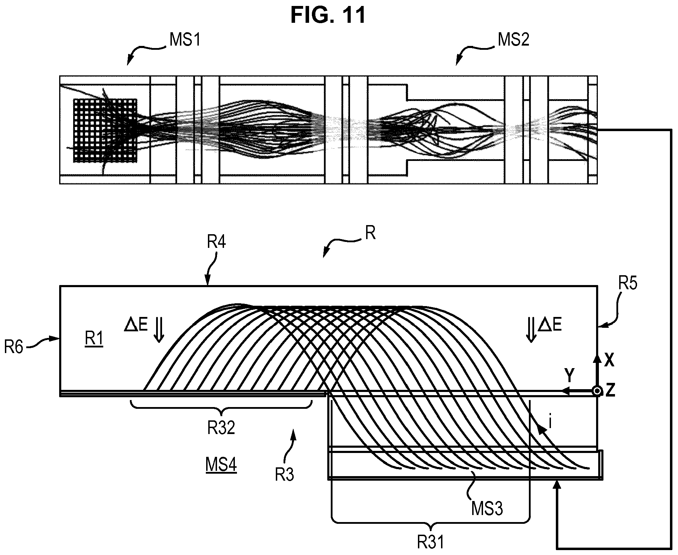

La figure 11 est issue d'une telle simulation et illustre la trajectoire des ions dans les différents éléments du spectromètre de masse.

Eventuellement, le micro-réflectron pourrait comprendre plus de deux électrodes pour polariser la couche résistive de la face R1, bien que cela ne paraisse pas nécessaire en raison de la petite taille du dispositif.

Le micro-réflectron permet à des ions dotés du même rapport masse sur charge, mais d'énergies cinétiques différentes, d'arriver au détecteur D_{TOF} en même temps.

Il existe en effet une position, en aval du réflectron, où la pénalité en temps imposée aux ions les plus énergétiques compense exactement l'avantage que ceux-ci avaient initialement sur les ions moins énergétiques.

C'est à cette position, dite plan de focalisation temporelle des ions de même rapport m/z, qui se trouve généralement dans la zone de vol libre MS4, que l'on place le détecteur D_{TOF}.

Généralement, ledit plan focal temporel se trouve à quelques mm, voire quelques cm, de la sortie du micro-réflectron.

A titre indicatif, les spectromètres de masse de haute résolution présents sur le marché possèdent un réflectron dont la longueur est de l'ordre de 20 à 30 cm, ce qui impose un encombrement important. En outre, la distance entre la sortie et le plan focal de ces réflectrons est de l'ordre de plusieurs dizaines de centimètres.

Par ailleurs, ces réflectrons sont constitués d'un assemblage d'électrodes annulaires discrètes reliées par des résistances électriques, qui consomment beaucoup d'énergie.

La miniaturisation du réflectron permet d'augmenter considérablement le pouvoir de résolution, c'est-à-dire jusqu'à des valeurs de 1000 à 2000, par rapport aux spectromètres de masse miniaturisés existants.

En outre, du fait des faibles dimensions de la couche résistive, la consommation énergétique du micro-réflectron est bien inférieure à celle des réflectrons existants.

Cette diminution de taille autorise donc l'utilisation d'une couche résistive continue.

Par ailleurs, le fait de fabriquer dans le volume d'un même substrat tous les éléments du spectromètre de masse, de la source d'ions jusqu'à la zone de vol libre, permet d'en maîtriser les positionnements et alignements, sans nécessiter aucun dispositif de liaison des différents éléments.

En ce sens, on peut qualifier la structure du spectromètre de masse de monolithique, en ce sens qu'elle ne repose que sur des techniques de micro-structuration de substrats et requiert aucun assemblage mécanique de composants.

Sur les figures 8 à 10, le spectromètre de masse comprend un unique micro-réflectron.

Cependant, il n'est pas exclu de placer en série au moins deux micro-réflectrons, afin d'augmenter encore davantage le pouvoir de résolution du spectromètre de masse.

Pour éviter les dispersions temporelles, le second micro-réflectron doit être placé dans le plan focal temporel du premier.

Dans ce cas, on fait de préférence en sorte que le plan focal temporel du premier réflectron coïncide avec son plan de sortie.

La focale de l'ensemble des micro-réflectrons correspond à la zone de vol libre du spectromètre de masse et définit l'emplacement du détecteur D_{TOF}.

### Zone de vol libre

La zone de vol libre MS4, qui est distincte du micro-réflectron et qui est agencée à la sortie de celui-ci, est une zone sans champ électrostatique et est donc typiquement dépourvue d'électrodes.

Ladite zone de vol libre MS4, dont la longueur est au plus de quelques cm, permet une propagation libre des ions, qui possèdent chacun une masse propre et par conséquent une énergie cinétique différente.

Les ions arrivent donc séparés temporellement en fonction de leur masse, sur le détecteur D_{TOF} placé à la sortie de la zone de vol libre.

Ledit détecteur n'est généralement pas placé parallèlement à l'orifice de sortie du micro-réflectron, mais avec une orientation angulaire par rapport à celle-ci, comme cela est schématisé à la figure 8.

De manière avantageuse, le détecteur est un compteur d'ions du type « Faraday Cup ».

Un tel détecteur peut en effet être intégré à une puce de silicium.

Ainsi, il peut être fabriqué en même temps que le canal de vol des ions, dans le volume du même substrat.

Dans ce cas, le détecteur est formé d'un élément en silicium fortement dopé (c'est-à-dire avec une concentration supérieure à 10¹⁹ cm⁻³) polarisé, dont on mesure le courant circulant du fait de l'apport des ions.

Naturellement, d'autres types de détecteurs pourront être employés sans pour autant sortir du cadre de l'invention, par exemple du type Channeltron ou galette de micro-canaux.

L'ensemble des zones décrites ci-dessus est fabriqué dans ou sur une puce, par exemple de silicium, dont la surface est de quelques cm².

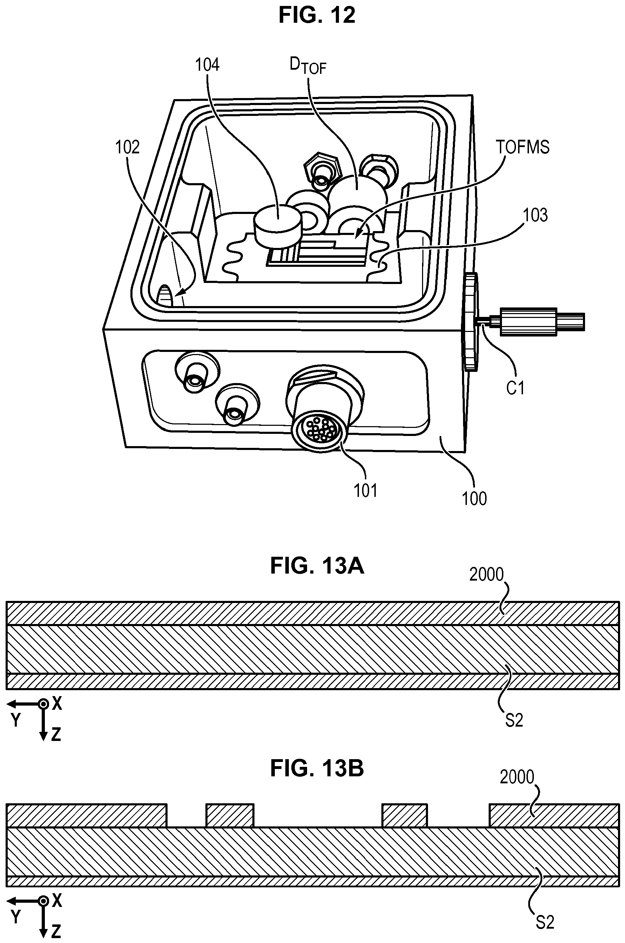

On connecte alors ladite puce sur une carte de circuit imprimé 103 (cf. figure 12) afin de connecter électriquement les différentes électrodes à une électronique de commande.

On place ensuite ladite carte, ainsi que la source d'électrons 104 et le détecteur D_{TOF} dans un boîtier étanche dans lequel on peut faire le vide.

Un tel boîtier 100 est illustré ouvert sur la figure 12, le couvercle n'ayant pas été représenté.

Une pompe à vide (non représentée) est agencée par exemple sur la paroi extérieure du boîtier 100 et connectée par un passage étanche 102 au volume intérieur du boîtier.

Le vide est en effet nécessaire pour le bon fonctionnement de la chambre d'ionisation, afin de n'ioniser que les espèces à analyser et pas d'éventuels contaminants.

Le vide permet en outre d'augmenter le libre parcours moyen des ions dans la zone de vol libre afin de préserver un rendement de transmission le plus élevé possible.

On notera que le vide réalisé dans ce spectromètre de masse miniaturisé ne nécessite pas d'être aussi poussé (par exemple, limité à 10⁻³ mbar) que dans la plupart des spectromètres de masse macroscopiques (qui est de l'ordre de 10⁻⁶ mbar).

En effet, une pression absolue de l'ordre de 10⁻³ mbar est suffisante pour la mise en oeuvre du système d'analyse selon l'invention.

La pompe à vide est de préférence une pompe miniature et peut avantageusement être choisie parmi les dispositifs suivants :
- une pompe unique primaire de type pompe ionique, commercialisée par exemple par la société SAES, sous réserve d'une adaptation pour l'optimiser au regard du faible volume du spectromètre de masse ;
- l'association d'une petite pompe primaire à membrane, du type pompe Pfeiffer MVP003 ou MVP006, et d'une pompe miniature dite turbomoléculaire commercialisée pat la société Creare, destinée à affiner le niveau de vide ou tout au moins le maintenir après chaque injection d'espèces à analyser dans le micro-spectromètre.

Eventuellement, il est également possible de positionner une valve entre la sortie du module de séparation et l'entrée du micro-spectromètre ; cette valve est actionnée pendant la durée de chaque injection, ce qui permet d'optimiser l'utilisation des pompes.

Le boîtier 100 comprend en outre un passage étanche 101 pour les câbles de transmission des signaux en entrée et en sortie.

De manière avantageuse, ledit boîtier 100 étant typiquement en un matériau métallique, il constitue une cage de Faraday permettant d'isoler le spectromètre de masse des perturbations électromagnétiques extérieures.

Le tube micro-capillaire C1 connectant le module de séparation (non illustré) et le spectromètre de masse entre dans le boîtier 100 par un passage étanche.

La longueur des différents éléments du spectromètre dépend des caractéristiques que l'on souhaite donner au spectromètre.

Les dimensions caractéristiques de ce spectromètre peuvent être proches de 1 à 3 cm de côté pour 1 à 1,5 mm d'épaisseur.

Cette conception du micro-réflectron permet de mettre à profit les performances intrinsèques de l'architecture des spectromètres de masse à temps de vol, à savoir une gamme de masse analysée importante, une bonne sensibilité, notamment en raison de l'injection orthogonale, et l'acquisition du spectre de masse à fréquence élevée.

Le dispositif final étant de petites dimensions, le libre parcours moyen des ions est considérablement réduit par rapport à celui d'un spectromètre de masse classique.

On va maintenant décrire un procédé permettant de fabriquer le spectromètre de masse dans le volume d'un substrat par structuration de celui-ci.

Les figures 13A à 13K décrites ci-dessous correspondent à une coupe du micro-réflectron R dans un plan parallèle à (y, z).

Bien que non représentées sur ces figures, les autres zones du spectromètre de masse sont également formées pendant les étapes de formation du micro-réflectron, en mettant à profit les étapes de structuration mises en oeuvre, étant entendu que certains éléments (par exemple, la couche résistive du micro-réflectron, ou les différentes électrodes) peuvent n'être formés que dans des régions particulières du spectromètre de masse.

En référence à la figure 13A, on choisit un substrat S2 de silicium qui est recouvert sur au moins une de ses faces principales par une couche 2000 d'un matériau de masquage présentant une sélectivité vis-à-vis de la gravure par rapport au silicium, ladite couche 2000 étant destinée à protéger les régions du substrat S2 qui ne doivent pas être gravées.

Par exemple, ladite couche de masquage 2000 est une couche d'oxyde de silicium (SiO₂).

Son épaisseur est typiquement comprise entre 5 et 10 µm.

Ladite couche 2000 peut être formée par oxydation thermique ou par une technique de dépôt telle que le dépôt PECVD (acronyme du terme anglo-saxon « Plasma-Enhanced Chemical Vapor Déposition » ou dépôt chimique en phase vapeur assisté par plasma).

Le cas échéant, une couche du même matériau que celui de la couche 2000 peut également être formée sur l'autre face principale du substrat S2, et pourra éventuellement être retirée lors d'une étape ultérieure de fabrication.

En référence à la figure 13B, on met en oeuvre une étape de gravure sèche (par exemple, une gravure de type RIE (acronyme du terme anglo-saxon « Reactive Ion Etching » ou gravure ionique réactive) de la couche de masquage 2000 pour supprimer l'oxyde des régions de la surface du substrat S2 qui doivent être ultérieurement gravées.

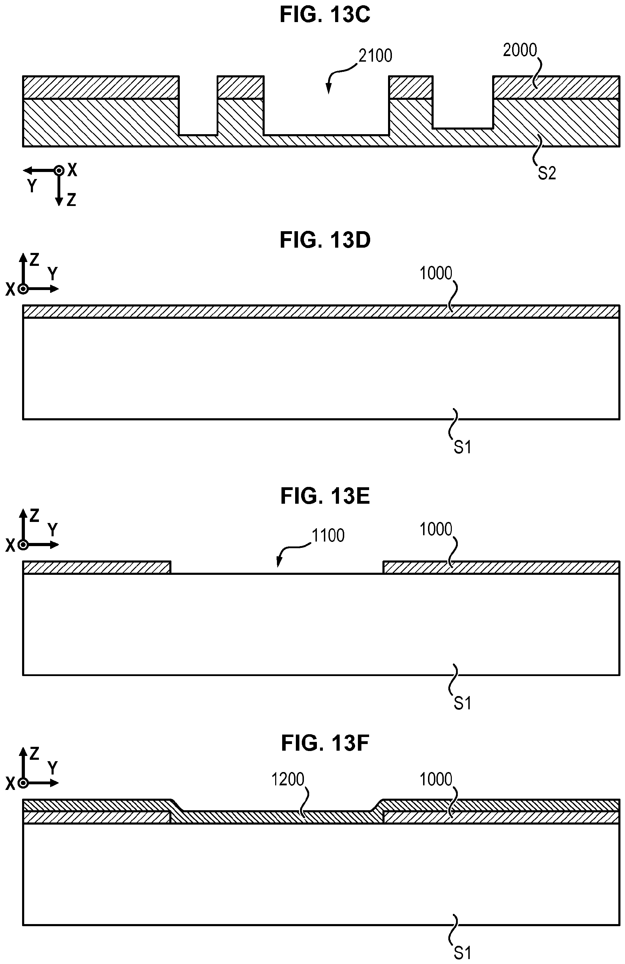

En référence à la figure 13C, on met en oeuvre une étape de gravure profonde, par exemple une gravure ionique réactive profonde) pour évider le substrat S2 en vue de former les cavités destinées au passage des ions dans le spectromètre.

Dans la coupe considérée, la cavité 2100 est ainsi destinée à former des parois du micro-réflectron R.

Ladite gravure est dite profonde car elle est effectuée sur une profondeur de quelques centaines de micromètres.

Dans une étape ultérieure non illustrée, on retire la couche de masquage 2000, par exemple au moyen d'acide fluorhydrique (HF).

En référence à la figure 13D, on utilise par ailleurs un substrat de verre S1 sur lequel on dépose une couche métallique 1000.

Ladite couche métallique 1000 est destinée à constituer des électrodes du spectromètre.

Son épaisseur est de l'ordre de quelques centaines de nanomètres, par exemple 500 nm.

Ladite couche 1000 est par exemple constituée d'un alliage aluminium-silicium, de tungstène, d'aluminium, ou de titane.

La couche métallique 1000 peut être déposée par toute technique connue, telle qu'un procédé de dépôt physique en phase vapeur (PVD pour « Physical Vapor Déposition ») ou un procédé d'évaporation.

En référence à la figure 13E, on met ensuite en oeuvre une gravure de la couche métallique 1000 sur certaines régions du substrat S1, afin d'individualiser les différentes électrodes du spectromètre de masse.

En particulier, la région 1100 du substrat S1 où l'on a retiré la couche métallique 1000 correspond à la région dans laquelle la paroi résistive du micro-réflectron R1 doit être déposée.

La gravure peut être réalisée par voie humide, avec un agent de gravure sélectionné en fonction du métal de la couche métallique 1000, ou encore par plasma.

En référence à la figure 13F, on dépose une couche 1200 d'un matériau résistif destiné à constituer la couche résistive du micro-réflectron.

Ladite couche 1200 peut en un matériau semi-conducteur tel que du silicium amorphe, du silicium polycristallin, du germanium, voire d'un matériau autre qu'un semi-conducteur.

L'épaisseur de la couche 1200 dépend de la résistivité électrique du matériau choisi, de sorte à générer, entre les électrodes mentionnées plus haut, un gradient de potentiel dans la couche résistive du micro-réflectron qui soit suffisant pour créer, dans le micro-réflectron, un gradient de champ électrostatique permettant de remplir la fonction de déviation des ions.

A cet égard, l'épaisseur de la couche 1200 est typiquement comprise entre 5 et 500 nm.

Le cas échéant, la résistivité électrique de la couche 1200 peut être ajustée par dopage.

Le dépôt de la couche 1200 est réalisé par exemple par épitaxie.

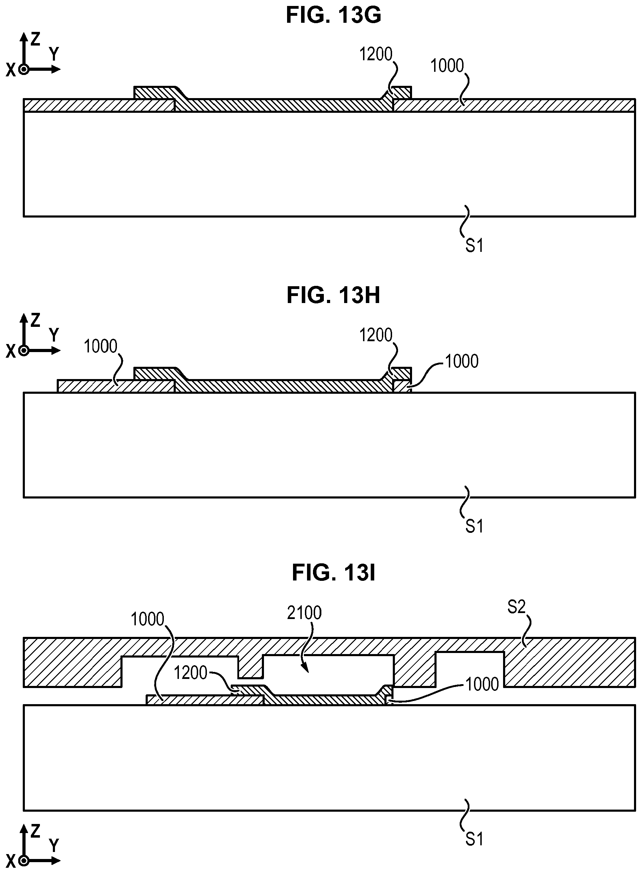

En référence à la figure 13G, on met ensuite en oeuvre une gravure de la couche résistive 1200 de sorte à la retirer de toute la surface du substrat S1 à l'exception de la région destinée à former la paroi du micro-réflectron, en maintenant néanmoins un contact direct entre la couche résistive 1200 et la couche métallique 1000 sous-jacente de manière à permettre la polarisation de la couche résistive à l'aide d'électrodes formées à partir de la couche métallique.

Dans cette zone de contact, la couche résistive est localement dopée afin d'assurer un bon contact ohmique.

La gravure peut être une gravure sèche par plasma ou une gravure par voie humide.

Enfin, en référence à la figure 13H, on peut mettre en oeuvre une dernière série d'étapes de gravure de la couche métallique 1000 et de la couche résistive 1200 pour définir la forme des électrodes.

De manière avantageuse, la couche métallique 1000 dépasse latéralement de la couche résistive 1200, ce qui permet de faciliter la polarisation de l'électrode.

Ensuite, en référence à la figure 13I, on solidarise le substrat S1 et le substrat S2.

De manière avantageuse, la technique de solidarisation desdits substrats est la technique de soudure anodique (« anodic bonding » selon la terminologie anglo-saxonne), qui, par compression, chauffage et polarisation de l'ensemble silicium/verre, induit des liaisons chimiques à l'interface entre le verre du substrat S1 et le silicium du substrat S2.

Par exemple, la température de mise en oeuvre de cette technique est de 500°C environ et la tension de polarisation de l'ordre de 1 kV.

De manière alternative, la solidarisation des substrats peut être réalisée par un collage au moyen d'une résine, ou un collage eutectique, du type étain-plomb, or-étain, etc.

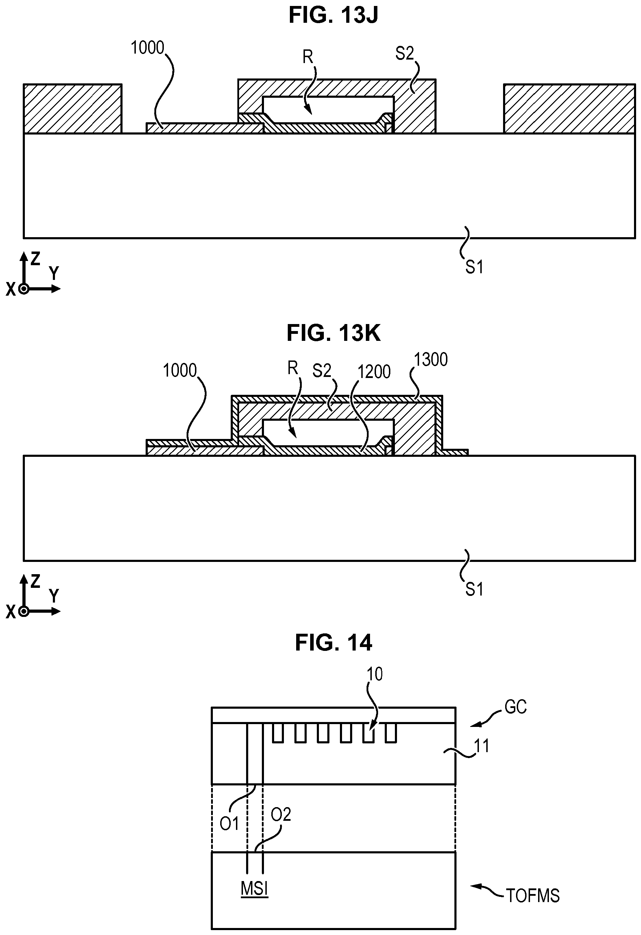

En référence à la figure 13J, on grave à nouveau le substrat S2 de silicium à travers un masque (non représenté).

Cette gravure permet d'individualiser le canal dans lequel les ions vont se déplacer et, le cas échéant, d'achever la structuration des autres parties du spectromètre.

Ainsi, par exemple, les lentilles L1 à L3 de la zone de focalisation MS2 peuvent être structurées dans le substrat S2 de silicium sous la forme d'anneaux de silicium séparés d'une distance de l'ordre de 1 mm.

On peut constater que, dans le canal de vol ainsi formé, l'électrode située sous la couche résistive 1200 reste accessible depuis l'extérieur du canal, la couche résistive 1200 étant au contraire enfermée dans le volume du canal.

Ensuite, en référence à la figure 13K, on met en oeuvre un nouveau dépôt d'une couche métallique 1300 destinée à former une électrode entourant toute la section du canal.

On obtient ainsi un micro-spectromètre de masse à temps de vol formé de manière monolithique dans le volume des substrats S1 et S2, le substrat S1 remplissant également la fonction de support du dispositif.

Selon un mode de réalisation, la colonne de chromatographie et le spectromètre de masse sont réalisés chacun sur une puce de silicium selon les procédés décrits ci-dessus.

Ils peuvent alors être connectés par un tube micro-capillaire de silice désactivée, ne générant pas d'interaction chimique entre les espèces de l'échantillon et les parois dudit tube micro-capillaire.

De manière alternative, il est également possible de connecter la colonne et le spectromètre de masse en superposant deux substrats ou deux puces portant ces dispositifs.

Comme illustré en coupe de manière schématique à la figure 14, ceci suppose d'avoir au préalable réalisé, dans le substrat comprenant la colonne micro-capillaire GC, une ouverture O1 traversant une face principale dudit substrat pour permettre la sortie de l'effluent dans une direction perpendiculaire à ladite face, et, dans le substrat comprenant le spectromètre de masse TOFMS, une ouverture O2 traversant une face principale dudit substrat pour permettre l'entrée de l'effluent de la colonne dans la chambre d'ionisation du spectromètre de masse.

Un alignement des substrats permet d'assurer la mise en correspondance de ces deux ouvertures 01, 02 lors de l'assemblage.

On peut ensuite individualiser une puce par découpe desdits substrats assemblés.

On forme ainsi un dispositif tridimensionnel comprenant un étage de séparation et un étage de spectrométrie de masse.

Enfin, il est également envisageable d'intégrer, sur une même puce de silicium, la colonne de chromatographie et le spectromètre de masse.

Ce mode de réalisation est décrit en détail ci-dessous.

### Intégration de la colonne micro-capillaire de chromatographie et du spectromètre de masse sur une même puce de silicium

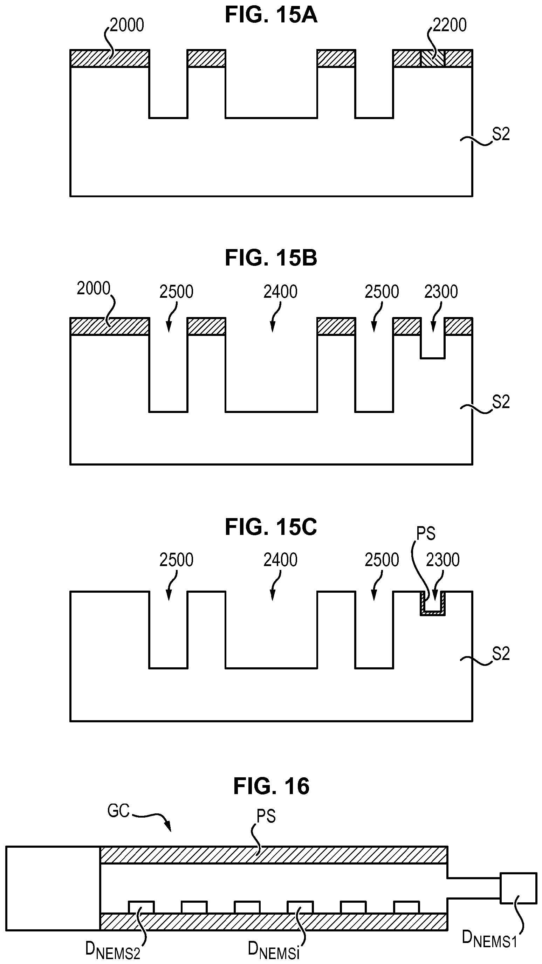

Les figures 15A à 15C sont des vues en coupe selon un plan de coupe similaire à celui des figures 13A à 13K.

En référence à la figure 15A, on choisit un substrat S2 de silicium afin d'y structurer les parois du canal dans lequel circulent les ions dans le spectromètre de masse.

On forme sur ledit substrat S2 deux masques de gravure 2000, 2200.

On grave une partie du premier masque 2000 correspondant aux régions du substrat S2 à graver pour former les éléments du spectromètre de masse, puis l'on met en oeuvre une gravure ionique réactive profonde du substrat S2 afin de former les cavités nécessaires à la structuration du spectromètre de masse.

En référence à la figure 15B, on grave le second masque 2200 correspondant aux régions du substrat S2 à graver pour former le sillon de la colonne micro-capillaire de chromatographie, puis l'on grave ledit sillon 2300 dans le substrat S2 par reprise de la gravure ionique réactive profonde.

Ledit sillon 2300 peut par exemple présenter la forme d'une spirale telle qu'illustrée aux figures 6 et 7.

A l'issue de ces deux séquences de gravure ionique réactive profonde, le substrat de silicium comprend donc des cavités 2400 appartenant au spectromètre de masse, et qui présentent une profondeur de l'ordre de 600 µm, tandis que le sillon 2300 de la colonne de chromatographie présente une profondeur de l'ordre de 100 µm (cf. figure 15C). Les cavités 2500 visibles de part et d'autre de la cavité 2400 permettent d'accéder au canal qui sera formé après solidarisation du substrat S2 avec le substrat S1 de verre, pour réaliser les électrodes.

En référence à la figure 15C, on fonctionnalise le sillon 2300 de la colonne de chromatographie en y déposant la phase stationnaire PS choisie.

Ladite phase stationnaire peut être déposée de manière localisée uniquement dans ledit sillon 2300, en utilisant des techniques de pochoir ou de lithographie.

De manière alternative, il est envisageable de déposer la phase stationnaire sur toute la surface du substrat S2 en utilisant des techniques telles que la pulvérisation cathodique (« sputtering » selon la terminologie anglo-saxonne), le dépôt physique en phase vapeur (PVD).

Dans ce cas, les parois du canal dans lequel circuleront les ions dans le spectromètre de masse sont alors également recouvertes de la phase stationnaire.

Ce revêtement ne perturbe cependant pas le contrôle électrostatique des ions tant que la phase stationnaire présente des propriétés diélectriques, ce qui est le cas des phases telles que la silice poreuse, l'oxyde de silicium dopé au carbone (SiOC), etc.

Par ce procédé, il est possible de fabriquer de manière collective, sur un substrat de diamètre de 200 mm par exemple, une pluralité de micro-spectromètres et de colonnes, puis d'individualiser les puces par découpe du substrat.

Les étapes ultérieures sont identiques à celles décrites en référence aux figures 13D à 13K, c'est-à-dire que l'on solidarise le substrat S2 ainsi structuré à un substrat S1 sur lequel ont été formées des électrodes du spectromètre de masse ainsi que la couche résistive du micro-réflectron, puis l'on effectue une gravure supplémentaire du substrat S2 (en particulier au niveau des cavités 2500) pour accéder aux parois du canal de circulation des ions et former les électrodes enrobant ledit canal.

### Micro ou nano-détecteur non destructif

De manière avantageuse mais optionnelle, le système comprend en outre au moins un micro ou nano-détecteur non destructif.

Ce type de détecteur comprend les détecteurs électromécaniques de type MEMS, NEMS ou non électromécaniques, tels que les nano-TCD.

Ces détecteurs présentent l'avantage d'effectuer une mesure non destructive, de sorte qu'ils peuvent être placés en amont du spectromètre de masse.

Au contraire, le spectromètre de masse effectuant une mesure destructive, il ne serait en effet pas possible de placer de tels détecteurs en aval du spectromètre de masse.

Comme expliqué plus haut, le choix du détecteur doit prendre en compte la possibilité de le mettre en place dans la veine fluidique dans laquelle circule le gaz sans affecter la régularité de la section de ladite veine.

La combinaison d'au moins un micro ou nano-détecteur et du spectromètre de masse à temps de vol présente plusieurs avantages.

D'une part, elle permet de procurer une fonction d'auto-diagnostic du système.

En effet, le fait que l'un des dispositifs détecte une espèce tandis que l'autre ne le détecte pas est un indice d'un dysfonctionnement du système.

De même, une calibration du système est rendue possible par l'injection d'un échantillon de référence présentant une composition connue ; la cohérence des résultats obtenus par chacun des deux dispositifs permet alors de confirmer le bon fonctionnement du micro ou nano-détecteur non destructif et du spectromètre de masse.

D'autre part, cette combinaison permet d'affiner les informations recueillies sur les différentes espèces présentes dans l'échantillon.

En effet, dans la mesure où le micro ou nano-détecteur et le spectromètre de masse sont basés sur des principes de mesure différents, les informations obtenues par chacun de ces dispositifs sont complémentaires et permettent, le cas échéant, de discriminer deux espèces non différenciées par l'un des dispositifs utilisé isolément.

Tel est le cas notamment lorsque l'échantillon contient plusieurs espèces présentant le même rapport masse/charge (m/z), du fait de la nature même de ces espèces ou d'une ionisation forte ayant pour effet de charger de manière multiple une espèce ou de la casser.

Par exemple, les molécules CH₃CHOH, CH₂CH₂OH et CH₂OCH₂ ont un rapport m/z identique égal à 45 ; les molécules CN (cyanure) et C₂H₂ présentent quant à elles un rapport m/z identique égal à 26.

Ces molécules sont donc difficilement différentiables par le spectromètre de masse, sans traitement du signal approprié.

En revanche, ces molécules peuvent être directement différenciées par leur affinité chimique avec une couche de fonctionnalisation déposée sur un détecteur gravimétrique de type MEMS ou NEMS.

En outre, lorsqu'une espèce particulière doit être détectée par le système d'analyse, il est possible de fonctionnaliser le nano ou micro-détecteur avec un matériau très sélectif et réagissant spécifiquement à la présence de cette espèce.

Ceci permet de réduire la détection de faux positifs ou de faux négatifs.

Ce mode de réalisation présente donc un intérêt particulier pour le contrôle d'une espèce toxique sur un site industriel, ou pour le suivi de l'exposition à un agent chimique neurotoxique de guerre (CWA, acronyme du terme anglo-saxon « Chemical Warfare Agent »).

Par ailleurs, un ou plusieurs détecteurs NEMS de type résonateurs peuvent être avantageusement placés le plus près possible du spectromètre de masse, dans le boîtier sous vide dans lequel il est logé, afin d'améliorer la performance des détecteurs NEMS.

En effet, le facteur de qualité de ces nano-structures est amélioré de l'ordre d'un facteur 10 aux pressions envisagées, ce qui permet d'abaisser les limites de détection.

Enfin, selon une forme d'exécution décrite dans l'exemple n°1, il est possible d'intégrer au moins un micro ou nano-détecteur à au moins une colonne micro-capillaire de chromatographie, tel que cela est décrit dans le document WO 2011/154362.

### Système d'analyse complet

Les principaux composants du système d'analyse ayant été décrits individuellement, leur assemblage pour former un appareil fonctionnel est exposé brièvement ci-après.

Outre ces principaux composants, optionnels ou non, le système d'analyse comprend en outre une carte électronique de commande de chaque composant (microcontrôleur pour piloter les injections, le module de séparation, les valves, les modules de chauffage si besoin, etc...) et une carte électronique de commande de la partie détection (carte électronique pour la partie spectromètre de masse, carte électronique supplémentaire pour la partie NEMS le cas échéant).

A cela peuvent s'ajouter une pompe permettant de prélever les échantillons d'intérêt dans certains cas (dans l'air ambiant par exemple ou ailleurs), des blocs d'alimentation (pour les cartes électroniques, les modules de thermalisation, les sources d'ionisations, les détecteurs, etc...) et une carte de connexion externe (carte ethernet par exemple) pour récupérer les données.

Des modules de transmission sans fil (pour connexion wifi ou bluetooth, etc., par exemple avec des ordinateurs portables, des tablettes, etc.) peuvent aussi être ajoutés.

L'ensemble est placé dans une boîte (de la taille typique d'une boîte à chaussures) dont le volume peut faire 1 litre pour un poids de l'ordre de 1 kg.

### Exemple n°1 - Couplage du spectromètre de masse à une colonne micro-capillaire de chromatographie instrumentée par des micro ou nano-détecteurs

Selon un mode de réalisation, le système d'analyse comprend en outre au moins un micro ou nano-détecteur placé en amont du spectromètre de masse.

Selon un mode de réalisation, ledit détecteur est intercalé entre la sortie du module de séparation et l'entrée du spectromètre de masse.

Selon un autre mode de réalisation, ledit détecteur est agencé à l'intérieur de l'une colonne micro-capillaire de chromatographie, de préférence incorporé à la paroi de celle-ci.

L'intégration d'un détecteur dans une colonne de chromatographie réalisée dans une puce de silicium est décrite dans [11].

Selon un mode de réalisation préféré, on grave d'une part le sillon définissant la colonne de chromatographie dans un premier substrat.

D'autre part, on forme dans un second substrat une pluralité de micro ou nano-détecteurs répartis selon un motif correspond au parcours du sillon.

On assemble le second substrat sur le premier par collage de type moléculaire, eutectique, anodique, film sec (résine) ou sérigraphie, de sorte à mettre en correspondance le sillon avec les différents détecteurs.

Il est également possible de combiner ces deux modes de réalisation en disposant dans le système au moins un détecteur dans une colonne micro-capillaire de chromatographie et un détecteur à la sortie de ladite colonne, à l'extérieur de celle-ci. Ceci permet d'utiliser plus facilement des détecteurs fonctionnalisés par des substances différentes de la phase stationnaire.

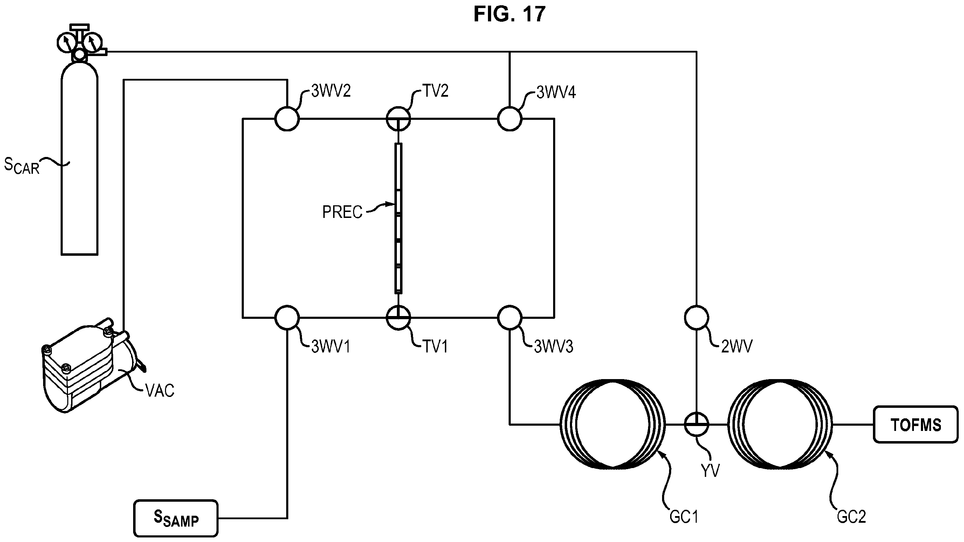

De manière particulièrement avantageuse, une pluralité de détecteurs DNEMSᵢ (où i est un entier compris entre 2 et le nombre total de détecteurs) sont disposés de l'entrée de la colonne à la sortie de la colonne, les détecteurs étant régulièrement espacés et en nombre suffisant pour que leur écartement soit inférieur à la moitié de la largeur d'un pic (figure 17).

Grâce à la présence de cette pluralité de détecteurs de gaz, on peut suivre le déplacement des espèces au sein de la colonne et en estimer plus précisément la vitesse instantanée.

Pour une colonne donnée, la largeur moyenne d'un pic peut être estimée par la "hauteur équivalente à plateau théorique".

En pratique, il est avantageux de disposer de détecteurs espacés d'un millimètre environ, soit environ 1000 pour une colonne d'un mètre.

Les détecteurs sont choisis de sorte que leur taille permette de les disposer à l'intérieur de la colonne.

Dans le cas d'une colonne micro-capillaire de chromatographie, la section typique d'une telle colonne a une largeur de quelques dizaines de micromètres, les détecteurs élémentaires choisis présentent alors une taille inférieure à cette valeur.

Ainsi, un nano-détecteur peut présenter une surface utile de quelques 100 nm² à quelques µm² suivant le diamètre de la colonne.

De préférence, les détecteurs sont les plus petits possibles, ce qui permet d'augmenter la sensibilité des moyens de détection et le nombre de détecteurs.

C'est le cas en particulier des NEMS dont au moins une des dimensions latérales est inférieure au micromètre.

Il est même possible de réaliser un détecteur élémentaire par plusieurs NEMS juxtaposés.

Les détecteurs NEMS sont par exemple des capteurs NEMS gravimétriques tels que ceux décrits dans [9], [12] ou [13].

Les capteurs sont avantageusement fonctionnalisés avec un polymère sensible, ou tout autre matériau adsorbant présentant une affinité chimique avec les espèces du mélange à analyser. En présence d'une espèce chimique, une certaine quantité de cette espèce va s'adsorber sur la couche sensible et générer un signal sur le capteur. Le matériau adsorbant peut être identique à la phase stationnaire ou être différent.

Il est bien entendu qu'un détecteur élémentaire peut être formé de plusieurs micro ou nano-capteurs NEMS.

Les détecteurs peuvent éventuellement comprendre d'autres micro-capteurs ou nano-capteurs de gaz connus, notamment des capteurs conductimétriques, dans lesquels le dépôt de molécules sur un support s'accompagne d'un changement de conductivité électrique. Ledit support peut être constitué de nanotubes de carbone.

Les détecteurs peuvent aussi comprendre des détecteurs dits nano-TCD (acronyme du terme anglo-saxon « Thermal Conductivity Detector ») qui mesurent la variation de conductivité thermique de l'échantillon de gaz lorsque celui-ci passe au niveau du capteur par rapport à celle d'un gaz porteur de référence.

Grâce auxdits micro ou nano-détecteurs agencés dans la colonne micro-capillaire, il est possible d'effectuer des analyses avec une cadence plus élevée que dans l'état de la technique.

En effet, il n'est plus nécessaire d'attendre que toutes les espèces d'un échantillon précédent soient sorties de la colonne avant d'injecter un échantillon suivant, puisque chacune des espèces est suivie lors de son déplacement dans la colonne et n'est plus uniquement détectée en sortie.

### Exemple n°2 - Couplage du spectromètre de masse à un module de séparation chromatographique bidimensionnelle (GCxGC)

Selon un mode de réalisation, le module de séparation peut comprendre plus d'une colonne micro-capillaire de chromatographie.

Ainsi, selon une forme d'exécution avantageuse illustrée à la figure 17, le module comprend deux colonnes micro-capillaires de chromatographie GC1, GC2 présentant des sélectivités différentes.

Les longueurs desdites colonnes peuvent également être différentes ; ainsi, de manière avantageuse, la seconde colonne est plus courte que la première.

Ces deux colonnes, qui sont reliées en série, présentent l'avantage d'augmenter la résolution de l'étape de séparation et la capacité de pics.

Les sélectivités différentes sont typiquement procurées par des phases stationnaires différentes.

Ainsi, par exemple, la phase stationnaire de la première colonne est une phase non polaire, telle que du polydiméthylsiloxane (PDMS).

La phase stationnaire de la seconde colonne peut quant à elle être une phase polaire, telle que du polyéthylène glycol (PEG).

Naturellement, l'homme du métier pourra être amené à choisir d'autres phases stationnaires pour optimiser la séparation des différentes espèces présentes dans l'échantillon.

Une telle association de deux colonnes est décrite dans [9].

Dans cet article, les deux colonnes sont en outre associées à un détecteur NEMS ; cependant, même si l'utilisation d'un tel détecteur est avantageuse, le système d'analyse peut comprendre ces deux colonnes sans aucun détecteur, un modulateur de flux étant alors couplé auxdites colonnes afin de gérer le flux de gaz successivement à travers chacune des colonnes.

La fonction du modulateur est de permettre la séparation dans la première colonne GC1, puis de figer le flux dans ladite première colonne pendant le passage de l'effluent collecté dans la seconde colonne GC2.

Le modulateur agit donc séquentiellement, la durée de la séparation le long de la seconde colonne GC2 étant désignée par le terme de période de modulation.

La période de modulation se décompose donc en une première phase correspondant à la durée du transfert de l'effluent de la première colonne vers la seconde colonne, et une seconde phase de séparation dudit effluent par la seconde colonne.

Selon un mode de réalisation, le modulateur est un modulateur de type « stop-flow ».

Un tel modulateur est décrit par exemple dans [10].

Le modulateur comprend une vanne YV qui est une vanne en Y, sans volume mort, agencée entre la première et la seconde colonne.

Des vannes en Y à volume mort nul traitées par Sulfinert^{™} sont disponibles auprès de la société Restek sous la référence 21389.

Le modulateur comprend en outre une vanne 2WV, qui est une vanne à deux voies normalement ouverte, qui est agencée entre la source S_{CAR} de gaz vecteur et la vanne en Y YV.

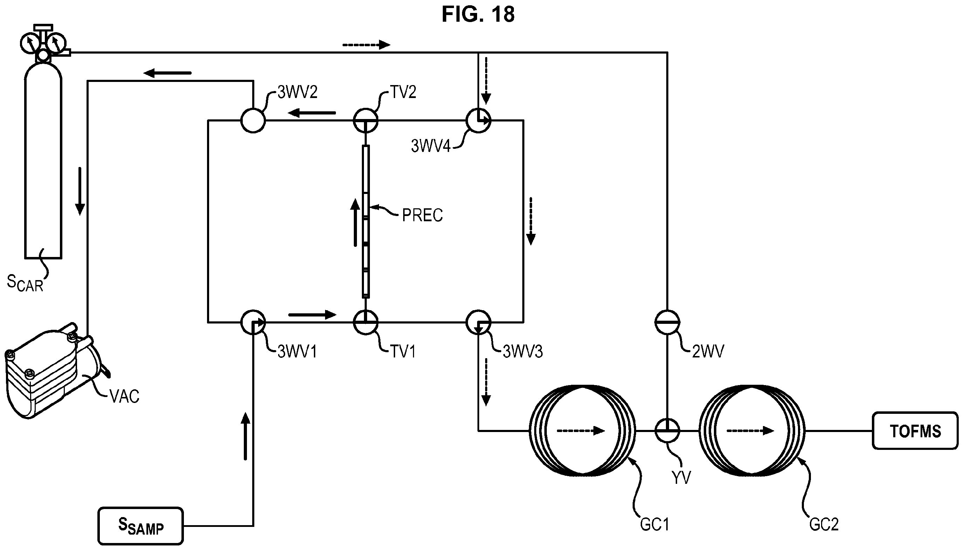

Les figures 18 à 20 présentent les différentes séquences de fonctionnement du modulateur et de la séparation par les deux colonnes associées.

Les vannes présentant les mêmes signes de référence que sur la figure 3 ont déjà décrites en référence à cette figure et ne seront pas à nouveau décrites ici.

En référence à la figure 18, et comme dans le cas illustré à la figure 4, lesdites vannes sont d'abord commandées pour permettre le passage de l'échantillon dans le préconcentrateur pour que ses espèces y soient adsorbées, pendant que le gaz vecteur circule, de manière isolée de l'échantillon, à travers la première puis la seconde colonne, jusqu'au spectromètre de masse. La vanne 2WV est fermée pendant cette phase.

Cette phase n'est mise en oeuvre que lorsqu'une préconcentration est requise.

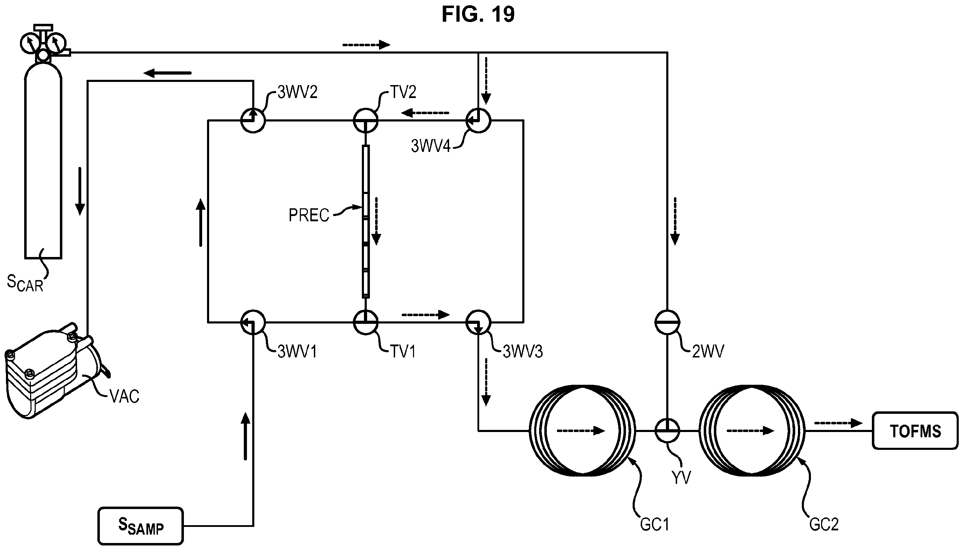

Pendant la première phase de la période de modulation, dite phase de chargement de la seconde dimension, illustrée à la figure 19, la vanne 2WV connectant la vanne YV agencée entre les deux colonnes et la source de gaz vecteur est fermée, tandis que la vanne YV est ouverte, de sorte que le gaz vecteur entraîne par désorption les espèces piégées dans le préconcentrateur PREC à travers la première colonne GC1 puis la seconde colonne GC2. Le gaz vecteur est en revanche bloqué par la vanne 2VW fermée et ne peut donc passer directement à travers la seconde colonne.

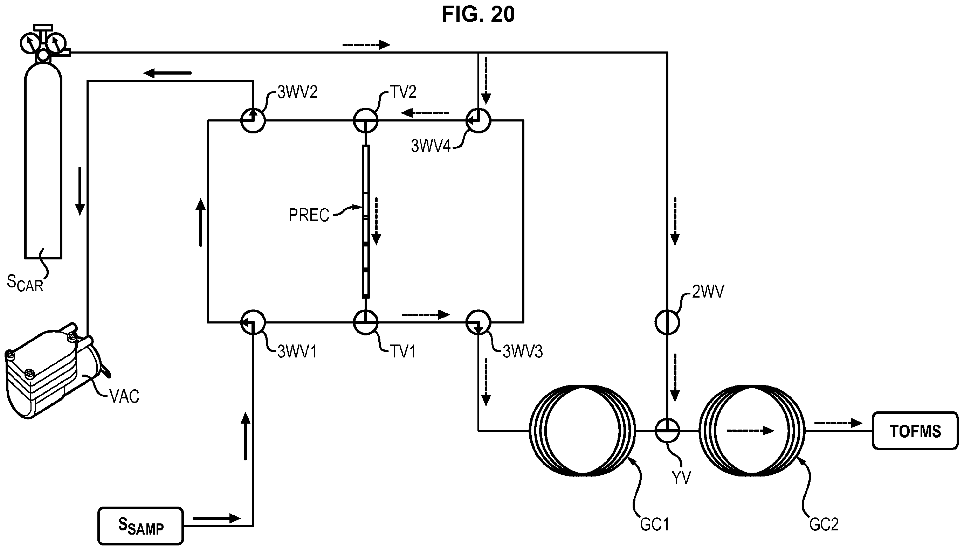

Pendant la seconde phase de la période de modulation, dite phase d'analyse de la seconde dimension, illustrée à la figure 20, la vanne 2WV connectant la vanne YV agencée entre les deux colonnes et la source de gaz vecteur est ouverte, la vanne YV étant également ouverte.

Du fait de l'ouverture de la vanne 2WV, qui permet le passage du gaz vecteur vers la vanne YV, la pression à la jonction entre les deux colonnes augmente pour atteindre la pression à l'entrée de la première colonne.

Cette augmentation de pression a les conséquences suivantes :
- en l'absence d'une différence de pression permettant l'écoulement du gaz vecteur dans la première colonne, le flux se fige dans la première colonne ;
- du fait de l'augmentation de la différence de pression entre l'entrée et la sortie de la seconde colonne, le flux de gaz circule dans la seconde colonne et permet une séparation rapide de l'effluent de la première colonne qui y a été introduit.

La durée de cette seconde phase de la période de modulation doit être suffisante pour garantir que l'espèce retenue le plus longtemps dans la seconde colonne en soit complètement sortie avant de refermer la vanne située à la jonction entre les deux colonnes et d'initier un nouveau transfert de l'effluent de la première colonne vers la seconde.

Typiquement, dans un modulateur de type « stop-flow », la durée de la phase de chargement est de l'ordre de 0,1 à 1 seconde tandis que la durée de la phase d'analyse qui lui succède est de l'ordre de 0,5 à 4 secondes.

La période de modulation est égale à la somme des durées de ces deux phases.

Cependant, ces valeurs sont susceptibles de varier en fonction de l'application, du type de colonnes et des conditions de mise en oeuvre de la séparation.

Il est à noter que l'invention n'est pas limitée à un modulateur de type « stop-flow » mais que d'autres modulateurs existants peuvent être employés dans le système d'analyse.

On peut ainsi citer, parmi les types de modulateurs connus, les modulateurs thermiques, les modulateurs à valve et les modulateurs à flux différentiel.

Par ailleurs, le fonctionnement du modulateur a été décrit ici en relation avec la mise en oeuvre d'une préconcentration.

Cependant, comme indiqué plus haut, la préconcentration est optionnelle et le modulateur peut fonctionner selon le même principe que celui décrit ci-dessus sans que le système ne comporte de préconcentrateur.

Selon une autre forme d'exécution de l'invention, on peut avantageusement agencer, dans chacune des colonnes, une pluralité de micro ou nano-détecteurs tels que décrits dans l'exemple n°1 et schématisés sur la figure 16.

Lesdits détecteurs permettent de s'affranchir du modulateur décrit plus haut.

En effet, il n'est plus utile de figer le flux issu de la première colonne le temps de la séparation dans la seconde colonne puisque l'intégration desdits détecteurs permet d'obtenir une image en temps réel de la formation des pics dans chacune des colonnes et donc d'en suivre parfaitement l'historique (même en cas de pics se recroisant ou se combinant, etc...).

Il devient ainsi possible de coupler plus de deux colonnes en série (jusqu'à cinq par exemple) avec des phases stationnaires différentes pour multiplier les dimensions de séparation et analyser des mélanges potentiellement complexes (c'est-à-dire comprenant plusieurs centaines à plusieurs milliers d'espèces distinctes).

L'intégration desdits micro ou nano-détecteurs implique de fabriquer les colonnes micro-capillaires dans des substrats de silicium, selon le procédé de gravure puis dépôt de la phase stationnaire décrit plus haut.

En revanche, si l'on choisit de piloter le flux de gaz dans les colonnes au moyen d'un modulateur, lesdites colonnes peuvent être soit des tubes micro-capillaires soit des colonnes agencées dans le volume d'un substrat de silicium.

L'association des deux colonnes est connue sous le terme de chromatographie bidimensionnelle (notée « GCxGC ») intégrale (« comprehensive » selon la terminologie anglo-saxonne) car la totalité d'un échantillon qui est introduit en entrée de la première colonne est introduite dans le détecteur (à savoir le spectromètre de masse ou, le cas échéant, dans un détecteur NEMS placé en amont de celui-ci) à la sortie de la seconde colonne, sans perte d'une partie de l'échantillon.

Le caractère bidimensionnel de la séparation chromatographique est lié au fait que les deux phases stationnaires sont différentes et choisies de sorte à présenter des mécanismes de séparation aussi indépendants l'un de l'autre que possible.

Ainsi, les première et seconde colonnes peuvent être considérées comme représentant respectivement une première et une seconde dimension de séparation.

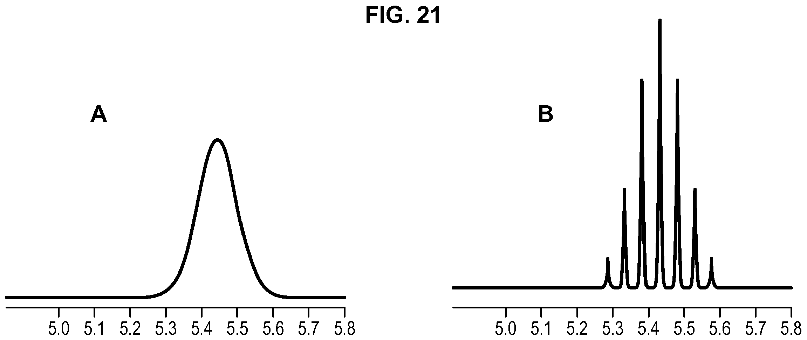

La figure 21 présente les pics obtenus respectivement à la sortie de la première colonne GC1 utilisée isolément (courbe A) et à la sortie des deux colonnes GC1 et GC2 associées (courbe B).

Il apparaît clairement que dans le premier cas la séparation se traduit par un unique pic qui est relativement large, tandis que dans le second cas la séparation résulte en une pluralité de pics plus étroits, qui sont compris dans le pic initial et qui correspondent chacun à une période de modulation.

En effet, grâce à sa phase stationnaire indépendante de celle de la première colonne, la seconde colonne est capable de séparer des espèces qui, dans la première colonne, présentent le même temps de rétention.

Naturellement, le module de séparation pourra comprendre plus de deux colonnes micro-capillaires de chromatographie présentant des sélectivités différentes et couplées en série par des modulateurs et/ou instrumentées par des micro ou nano-détecteurs sans pour autant sortir du cadre de la présente invention. On peut ainsi parler de chromatographie multidimensionnelle.

Le couplage d'une telle série de colonnes avec le spectromètre de masse permet de réaliser ainsi un module de séparation multidimensionnel avec un spectromètre de masse ultra compact.

Il est naturellement possible de combiner les différents modes de réalisation décrits plus haut.

Le système d'analyse peut être utilisé pour la détection de polluants ou de composés toxiques.

Du fait de son faible encombrement et de sa faible consommation énergétique, il peut se présenter sous la forme d'un appareil portatif et autonome, susceptible d'être transporté par un opérateur en vue d'effectuer des mesures sur le terrain.

Le système d'analyse peut également être utilisé pour de l'analyse biomédicale, par exemple pour l'identification de biomarqueurs, l'échantillon étant alors un gaz corporel tel que l'haleine.

Le système d'analyse peut également être utilisé pour le suivi des chaînes de fabrication et de distribution agroalimentaires.

Enfin, il va de soi que les exemples que l'on vient de donner ne sont que des illustrations particulières en aucun cas limitatives quant aux domaines d'application de l'invention.

### REFERENCES

[1] E. Wapelhorst, J.P. Hauschild, J. Müller, 'Complex MEMS: a fully integrated TOF micro mass spectrometer', Sensors and Actuators A 138 (2007) 22-27
[2] P. Siebert, G. Petzold, A. Hellenbart, J. Müller, 'Surface microstructure/miniature mass spectrometer', Applied Physics, A67, 155-160 (1998)
[3] H.J. Yoon, J.H. Kim, E. S. Choi, S. S. Yang, K. W. Jung, 'Fabrication of a novel micro time-of-flight mass spectrometer', Sensors and Actuators A 97-98 (2002) 441-447]
[4] J.P. Hauschild, E. Wapelhorst, J. Muller, 'Mass spectra measured by a fully integrated MEMS mass spectrometer', International Journal of Mass Spectrometry 264 (2007) 53-60
[5] C. Lu, E. Zellers, Anal. Chem. 2001, 73, 3449
[6] C. Lu, E. Zellers, Analyst 2002, 127, 1061
[7] J.M. Sanchez, R.D. Sacks, Anal. Chem. 2003, 75, 978
[8] J.M. Sanchez, R.D. Sacks, Anal. Chem. 2003, 75, 2231
[9] J.J. Whiting, C.S. Fix, J.M. Anderson, A. W. Staton, R.P. Manginell, D.R. Wheeler, E.B. Myers, M.L. Roukes, R.J. Simonson, 'High-speed two-dimensional gas chromatography using microfabricated GC columns combined with nanoelectromechanical mass sensors', Transducers 2009, 1666-1669
[10] C.S. Fix, J.J. Whiting, D. Porter, D. Graf, R.P. Manginell, J.M. Anderson, C. Washburn, A. Staton, S. Howell, J. Richards, E. Myers, M. Roukes, R.J. Simonson, , 'A high-speed two dimensional gas chromatography using micro fabricated GC columns combined with nanoelectromechanical mass sensors', Solid-State Sensors, Actuators and Microsystems Conférence, 2009. TRANSDUCERS 2009. International - 10.1109/SENSOR.2009.5285751
[11] WO 2011/154362
[12] EP 2 211 185
[13] E. Mile, G. Jourdan, I. Bargatin, S. Labarthe, C. Marcoux, P. Andreucci, S. Hentz, C. Kharrat, E. Colinet and L. Duraffourg, 'ln-plane nanoelectromechanical resonators based on silicon nanowire piezoresistive détection', Nanotechnology 21 (2010) 165504

## Revendications

1. Système d'analyse de gaz comprenant, de l'amont vers l'aval :
- un module (SEP) de séparation d'au moins une partie des espèces contenues dans le gaz à analyser, comprenant au moins une colonne micro-capillaire (GC) de chromatographie en phase gazeuse, et
- un spectromètre de masse à temps de vol (TOFMS) couplé audit module de séparation, ledit spectromètre comprenant une source d'ions (MS1, MS2) adaptée pour ioniser au moins une partie desdites espèces et émettre un faisceau d'ions, et une zone (MS4) de vol libre desdits ions,
ledit spectromètre de masse (TOFMS) étant agencé dans le volume d'au moins un substrat et comprenant un micro-réflectron (R) disposé entre la source d'ions (MS1, MS2) et la zone de vol libre (MS4), une paroi (R1) dudit micro-réflectron comprenant une couche en un matériau résistif, c'est-à-dire dont la résistivité électrique est d'au moins 1 kOhm.cm, adaptée pour être polarisée entre au moins deux régions de ladite couche de sorte à créer un gradient continu de champ électrostatique (ΔE) pour dévier la trajectoire des ions dans ledit micro-réflectron,
ledit micro-réflectron étant agencé de sorte à être parcouru par les ions dans une direction longitudinale parallèle à la direction (y) du faisceau d'ions à la sortie de la source (MS1, MS2) et ledit micro-réflectron comprenant au moins deux électrodes de polarisation de la couche résistive en contact avec lesdites régions de la couche résistive,
lesdites électrodes s'étendant dans la direction longitudinale du micro-réflectron, de sorte à générer dans ladite couche résistive un gradient de potentiel dans la direction transversale (x) du micro-réflectron de sorte que le gradient continu de champ électrostatique soit orienté transversalement à la trajectoire des ions dans le micro-réflectron,

2. Système selon l'une des revendications 1, **caractérisé en ce que** le spectromètre de masse comprend un canal agencé pour être parcouru par des ions, s'étendant entre deux plans parallèles à une face principale dudit au moins un substrat, la hauteur dudit canal étant inférieure à 1 mm et la longueur dudit canal étant au moins dix fois supérieure à ladite hauteur.

3. Système selon l'une des revendications 1 ou 2, **caractérisé en ce que** ladite couche résistive du micro-réflectron s'étend dans un plan parallèle à une face principale dudit au moins un substrat.

4. Système selon l'une des revendications 1 à 3, **caractérisé en ce que** le faisceau d'ions est émis par la source (MS1, MS2) dans une direction (y) orthogonale à la direction (x) d'introduction, dans le spectromètre, du gaz en provenance du module de séparation.

5. Système selon l'une des revendications 1 à 4, **caractérisé en ce que** le spectromètre comprend, entre la source d'ions (MS1, MS2) et le micro-réflectron (R), une zone (MS3) d'accélération des ions.

6. Système selon la revendication 5, **caractérisé en ce que** la zone (MS3) d'accélération des ions et la zone (MS4) de vol libre sont agencées le long d'une paroi longitudinale (R3), c'est-à dire parallèle à la direction du faisceau d'ions à la sortie de la source du micro-réflectron (R) de sorte à être adjacentes.

7. Système selon la revendication 6, **caractérisé en ce que** le micro-réflectron (R) comprend une première ouverture (R31) communiquant avec la zone d'accélération (MS3) pour l'entrée des ions dans le réflectron et une seconde ouverture (R32) communiquant avec la zone de vol libre (MS4) pour la sortie des ions, lesdites première et seconde ouvertures étant adjacentes dans une même paroi (R3) du micro-réflectron.

8. Système selon l'une des revendications 5 à 7, **caractérisé en ce que** la zone d'accélération (MS3) comprend deux électrodes (E31, E32) s'étendant parallèlement à la direction (y) du faisceau d'ions émis par la source (MS1, MS2), lesdites électrodes étant polarisables de sorte à générer un champ électrostatique apte à dévier les ions dans une direction (x) orthogonale à celle du faisceau d'ions à la sortie de la source pour faire pénétrer lesdits ions dans le micro-réflectron.

9. Système selon la revendication 8, **caractérisé en ce qu'**il comprend un dispositif impulsionnel adapté pour polariser lesdites électrodes (E31, E32) de la zone d'accélération (MS3) de sorte à faire entrer les ions accélérés de manière séquentielle dans le micro-réflectron.

10. Système selon l'une des revendications 1 à 9, **caractérisé en ce qu'**il comprend en outre un boîtier étanche couplé à une pompe à vide adaptée pour appliquer une dépression dans ledit boîtier, le substrat dans le volume duquel est agencé ledit spectromètre étant logé dans ledit boîtier étanche.

11. Système selon l'une des revendications 1 à 10, **caractérisé en ce que** ladite au moins une colonne micro-capillaire de chromatographie (GC) est agencée dans le volume d'au moins un substrat.

12. Système selon la revendication 11, **caractérisé en ce que** le module de séparation comprend au moins un micro ou nano-détecteur non destructif dans ladite au moins une colonne de chromatographie micro-capillaire.

13. Système selon l'une des revendications 1 à 12, **caractérisé en ce que** le module de séparation (SEP) comprend au moins deux colonnes micro-capillaires de chromatographie en phase gazeuse (GC1, GC2) couplées en série et comprenant chacune une phase stationnaire différente, et un modulateur de flux pour réguler le flux de gaz successivement à travers chacune desdites colonnes (G1, G2).

14. Système selon l'une des revendications 11 ou 12, **caractérisé en ce que** le module de séparation comprend au moins deux colonnes micro-capillaires de chromatographie en phase gazeuse (GC1, GC2) couplées en série et comprenant chacune une phase stationnaire différente, chacune desdites colonnes micro-capillaires (GC1, GC2) comprenant au moins deux micro ou nano-détecteurs non destructifs agencés dans lesdites colonnes.

15. Système selon l'une des revendications 1 à 14, **caractérisé en ce qu'**il comprend un conduit agencé entre la colonne micro-capillaire de chromatographie et le spectromètre de masse (TOFMS) et au moins un micro ou nano-détecteur (D) non destructif agencé dans ledit conduit, ledit conduit étant de section égale à celle de la colonne micro-capillaire de chromatographie de sorte à ne pas modifier la section de passage du gaz.

16. Système selon la revendication 15 en combinaison avec la revendication 13, **caractérisé en ce que** ledit détecteur non destructif est un nano-système électromécanique comprenant un résonateur et **en ce que** ledit détecteur est agencé dans le boîtier de mise en dépression du spectromètre de masse.

17. Système selon l'une des revendications 1 à 16, **caractérisé en ce qu'**il comprend en outre, en amont du module (SEP) de séparation, un circuit de préconcentration du gaz à analyser comprenant un préconcentrateur (PREC).

18. Procédé de fabrication d'un système d'analyse de gaz selon l'une des revendications 1 à 17, **caractérisé en ce que** la fabrication du spectromètre de masse comprend, dans au moins un substrat, une étape de gravure d'un substrat pour former au moins une partie d'un canal pour les ions, une étape de dépôt d'une couche résistive dans une région dudit canal destinée à former le micro-réflectron, et une étape de formation d'au moins deux électrodes pour polariser ladite couche résistive de sorte à créer un gradient continu de champ électrostatique dans ledit réflectron.

19. Procédé selon la revendication 18, **caractérisé en ce qu'**il comprend la découpe dudit au moins un substrat pour individualiser une puce comprenant le spectromètre de masse.

20. Procédé selon l'une des revendications 18 ou 19, **caractérisé en ce qu'**il comprend en outre la fabrication d'au moins une colonne micro-capillaire de chromatographie par gravure d'un sillon dans un substrat, fonctionnalisation dudit sillon par une phase stationnaire, puis scellement d'un capot sur ledit sillon.

21. Procédé selon la revendication 20, **caractérisé en ce que** le spectromètre de masse et la colonne micro-capillaire de chromatographie sont fabriqués dans des substrats distincts et **en ce que** l'on assemble la colonne de chromatographie et le spectromètre de masse par collage des faces principales des substrats dans lesquels ils sont formés, puis l'on découpe lesdits substrats assemblés pour individualiser une puce comprenant la colonne micro-capillaire de chromatographie et le spectromètre de masse.

22. Procédé selon la revendication 19, **caractérisé en ce qu'**il comprend la fabrication d'au moins une colonne de chromatographie par gravure d'un sillon dans le substrat dans lequel est agencée la zone de vol des ions du spectromètre de masse, la fonctionnalisation dudit sillon par une phase stationnaire et le scellement dudit substrat avec un autre substrat afin de fermer le canal de vol des ions et la colonne micro-capillaire de chromatographie.

## Patentansprüche

1. Gasanalysesystem, das von stromaufwärts nach stromabwärts Folgendes umfasst:
- ein Modul (SEP) zur Trennung mindestens eines Teils der im zu analysierenden Gas enthaltenen Spezies, das mindestens eine Mikrokapillarsäule (GC) für die Gaschromatografie umfasst, und
- ein Flugzeit-Massenspektrometer (TOFMS), das mit dem Trennmodul gekoppelt ist, wobei das Spektrometer eine lonenquelle (MS1, MS2), die so beschaffen ist, dass sie mindestens einen Teil der Spezies ionisiert und einen lonenstrahl aussendet, und einen Bereich (MS4) für den freien Flug der Ionen umfasst,
wobei das Massenspektrometer (TOFMS) im Volumen mindestens eines Substrats angeordnet ist und einen Mikroreflektor (R) umfasst, der zwischen der lonenquelle (MS1, MS2) und der Freiflugzone (MS4) angeordnet ist, wobei eine Wand (R1) des Mikroreflektors eine Schicht aus einem Widerstandsmaterial umfasst, d. h. mit einem spezifischen elektrischen Widerstand von mindestens 1 kOhm.cm, die so beschaffen ist, dass sie zwischen mindestens zwei Bereichen der Schicht polarisiert wird, um einen kontinuierlichen Gradienten des elektrostatischen Feldes (ΔE) zu erzeugen, um die Bahn der Ionen in dem Mikroreflektor abzulenken,
wobei der Mikroreflektor so angeordnet ist, dass er von den Ionen in einer Längsrichtung parallel zur Richtung (y) des lonenstrahls am Ausgang der Quelle (MS1, MS2) durchlaufen wird, und wobei der Mikroreflektor mindestens zwei Vorspannungselektroden der Widerstandsschicht umfasst, die mit den Bereichen der Widerstandsschicht in Kontakt stehen,
wobei sich die Elektroden in Längsrichtung des Mikroreflektors erstrecken, so dass in der Widerstandsschicht ein Potentialgradient in Querrichtung (x) des Mikroreflektors erzeugt wird, so dass der kontinuierliche Gradient des elektrostatischen Feldes quer zur Bahn der Ionen im Mikroreflektor ausgerichtet ist,

2. System nach einem der Ansprüche 1, **dadurch gekennzeichnet, dass** das Massenspektrometer einen Kanal umfasst, der so beschaffen ist, dass er von Ionen durchlaufen wird, und der sich zwischen zwei Ebenen parallel zu einer Hauptfläche des mindestens einen Substrats erstreckt, wobei die Höhe des Kanals weniger als 1 mm beträgt und die Länge des Kanals mindestens zehnmal so groß ist wie diese Höhe.

3. System nach einem der Ansprüche 1 oder 2, **dadurch gekennzeichnet, dass** die Widerstandsschicht des Mikroreflektors sich in einer Ebene parallel zu einer Hauptfläche des mindestens einen Substrats erstreckt.

4. System nach einem der Ansprüche 1 bis 3, **dadurch gekennzeichnet, dass** der lonenstrahl von der Quelle (MS1, MS2) in einer Richtung (y) orthogonal zur Richtung (x) der Einführung des Gases aus dem Trennmodul in das Spektrometer emittiert wird.

5. System nach einem der Ansprüche 1 bis 4, **dadurch gekennzeichnet, dass** das Spektrometer zwischen der lonenquelle (MS1, MS2) und dem Mikroreflektor (R) einen Bereich (MS3) zur Beschleunigung der Ionen umfasst.

6. System nach Anspruch 5, **dadurch gekennzeichnet, dass** die lonenbeschleunigungszone (MS3) und die Freiflugzone (MS4) entlang einer Längswand (R3), d. h. parallel zur Richtung des lonenstrahls am Ausgang der Mikroreflektorquelle (R), so angeordnet sind, dass sie nebeneinander liegen.

7. System nach Anspruch 6, **dadurch gekennzeichnet, dass** der Mikroreflektor (R) eine erste Öffnung (R31), die mit der Beschleunigungszone (MS3) für den Eintritt der Ionen in den Reflektor in Verbindung steht, und eine zweite Öffnung (R32), die mit der Freiflugzone (MS4) für den Austritt der Ionen in Verbindung steht, umfasst, wobei die erste und die zweite Öffnung in einer gleichen Wand (R3) des Mikroreflektors aneinandergrenzen.

8. System nach einem der Ansprüche 5 bis 7, **dadurch gekennzeichnet, dass** die Beschleunigungszone (MS3) zwei Elektroden (E31, E32) umfasst, die sich parallel zur Richtung (y) des von der Quelle (MS1, MS2) emittierten lonenstrahls erstrecken, wobei die Elektroden polarisierbar sind, um ein elektrostatisches Feld zu erzeugen, das die Ionen in eine Richtung (x) ablenken kann, die orthogonal zu der des lonenstrahls am Ausgang der Quelle verläuft, um die Ionen in den Mikroreflektor eindringen zu lassen.

9. System nach Anspruch 8, **dadurch gekennzeichnet, dass** es eine Impulsvorrichtung umfasst, die geeignet ist, die Elektroden (E31, E32) der Beschleunigungszone (MS3) zu polarisieren, so dass die beschleunigten Ionen sequentiell in den Mikroreflektor eintreten.

10. System nach einem der Ansprüche 1 bis 9, **dadurch gekennzeichnet, dass** es ferner ein abgedichtetes Gehäuse umfasst, das mit einer Vakuumpumpe gekoppelt ist, die so beschaffen ist, dass sie in dem Gehäuse einen Unterdruck anlegt, wobei das Substrat, in dessen Volumen das Spektrometer angeordnet ist, in dem abgedichteten Gehäuse untergebracht ist.

11. System nach einem der Ansprüche 1 bis 10, **dadurch gekennzeichnet, dass** die mindestens eine Mikrokapillarsäule für Chromatographie (GC) innerhalb des Volumens von mindestens einem Substrat angeordnet ist.

12. System nach Anspruch 11, **dadurch gekennzeichnet, dass** das Trennmodul mindestens einen nicht-destruktiven Mikro- oder Nanodetektor in der mindestens einen Mikrokapillarsäule für Chromatographie umfasst.

13. System nach einem der Ansprüche 1 bis 12, **dadurch gekennzeichnet, dass** das Trennmodul (SEP) mindestens zwei Gaschromatographie-Mikrokapillarsäulen (GC1, GC2), die in Reihe gekoppelt sind und jeweils eine andere stationäre Phase umfassen, und einen Flussmodulator zum Regulieren des Gasflusses nacheinander durch jede der Säulen (G1, G2) umfasst.

14. System nach einem der Ansprüche 11 oder 12, **dadurch gekennzeichnet, dass** das Trennmodul mindestens zwei Mikrokapillarsäule für Gaschromatographie (GC1, GC2) umfasst, die in Reihe gekoppelt sind und jeweils eine andere stationäre Phase umfassen, wobei jede der Mikrokapillarsäulen (GC1, GC2) mindestens zwei zerstörungsfreie Mikro- oder Nanodetektoren umfasst, die in den Säulen angeordnet sind.

15. System nach einem der Ansprüche 1 bis 14, **dadurch gekennzeichnet, dass** es eine Leitung umfasst, die zwischen der Mikrokapillarsäule für Chromatographie und dem Massenspektrometer (TOFMS) angeordnet ist, und mindestens einen zerstörungsfreien Mikro- oder Nanodetektor (D), der in der Leitung angeordnet ist, wobei die Leitung einen Querschnitt aufweist, der gleich dem der Mikrokapillarsäule für Chromatographie ist, so dass der Gasdurchgangsquerschnitt nicht verändert wird.

16. System nach Anspruch 15 in Verbindung mit Anspruch 13, **dadurch gekennzeichnet, dass** der zerstörungsfreie Detektor ein elektromechanisches Nanosystem ist, das einen Resonator umfasst, und dass der Detektor in der Vakuumbox des Massenspektrometers angeordnet ist.

17. System nach einem der Ansprüche 1 bis 16, **dadurch gekennzeichnet, dass** es außerdem stromaufwärts des Trennmoduls (SEP) einen Kreislauf zur Vorkonzentration des zu analysierenden Gases umfasst, der einen Vorkonzentrator (PREC) umfasst.

18. Verfahren zur Herstellung eines Gasanalysesystems nach einem der Ansprüche 1 bis 17, **dadurch gekennzeichnet, dass** die Herstellung des Massenspektrometers in mindestens einem Substrat einen Schritt des Ätzens eines Substrats umfasst, um mindestens einen Teil eines Kanals für Ionen zu bilden, einen Schritt des Abscheidens einer Widerstandsschicht in einem Bereich des Kanals, der dazu bestimmt ist, den Mikroreflektor zu bilden, und einen Schritt des Bildens von mindestens zwei Elektroden, um die Widerstandsschicht so zu polarisieren, dass ein kontinuierlicher Gradient eines elektrostatischen Feldes in dem Reflektor erzeugt wird.

19. Verfahren nach Anspruch 18, **dadurch gekennzeichnet, dass** es das Schneiden des mindestens einen Substrats umfasst, um einen Chip zu individualisieren, der das Massenspektrometer umfasst.

20. Verfahren nach einem der Ansprüche 18 oder 19, **dadurch gekennzeichnet, dass** es außerdem die Herstellung mindestens einer mikrokapillaren Chromatographiesäule durch Ätzen einer Rille in ein Substrat, Funktionalisieren der Rille mit einer stationären Phase und anschließendes Versiegeln einer Kappe auf der Rille umfasst.

21. Verfahren nach Anspruch 20, **dadurch gekennzeichnet, dass** das Massenspektrometer und die Mikrokapillarsäule für Chromatographie in getrennten Substraten hergestellt werden und dass die Mikrokapillarsäule für Chromatographie und das Massenspektrometer durch Verkleben der Hauptflächen der Substrate, in denen sie ausgebildet sind, zusammengebaut werden und dann die zusammengebauten Substrate geschnitten werden, um einen Chip zu individualisieren, der die Mikrokapillarsäule für Chromatographie und das Massenspektrometer umfasst.

22. Verfahren nach Anspruch 19, **dadurch gekennzeichnet, dass** es die Herstellung mindestens einer Mikrokapillarsäule für Chromatographie durch Ätzen einer Rille in das Substrat, in dem die lonenflugzone des Massenspektrometers angeordnet ist, Funktionalisierung der Rille durch eine stationäre Phase und Versiegelung des Substrats mit einem anderen Substrat umfasst, um den lonenflugkanal und die Mikrokapillarsäule für Chromatographie zu verschließen.

## Claims

1. A gas analysis system comprising, from upstream to downstream :
- a module (SEP) for separating at least some of the species contained in the gas to be analysed, comprising at least one micro-capillary gas chromatography (GC) column, and
- a time-of-flight mass spectrometer (TOFMS) coupled to the said separation module, the said spectrometer comprising an ion source (MS1, MS2) adapted to ionise at least some of the said species and to emit a beam of ions, and a region (MS4) for the free flight of the said ions,
said mass spectrometer (TOFMS) being arranged in the volume of at least one substrate and comprising a micro-reflectron (R) disposed between the ion source (MS1, MS2) and the free-flight zone (MS4), a wall (R1) of said micro-reflectron comprising a layer of a resistive material, i.e. whose electrical resistivity is at least 1 kOhm.cm, adapted to be polarised between at least two regions of said layer so as to create a continuous electrostatic field gradient (ΔE) to deflect the trajectory of ions in said micro-reflectron,
said micro-reflectron being arranged so as to be traversed by the ions in a longitudinal direction parallel to the direction (y) of the ion beam at the output of the source (MS1, MS2) and said micro-reflectron comprising at least two polarisation electrodes of the resistive layer in contact with said regions of the resistive layer,
said electrodes extending in the longitudinal direction of the micro-reflectron, so as to generate in said resistive layer a potential gradient in the transverse direction (x) of the micro-reflectron so that the continuous electrostatic field gradient is oriented transversely to the trajectory of the ions in the micro-reflectron,

2. System according to one of claims 1, **characterised in that** the mass spectrometer comprises a channel arranged to be traversed by ions, extending between two planes parallel to a principal face of said at least one substrate, the height of said channel being less than 1 mm and the length of said channel being at least ten times greater than said height.

3. System according to one of claims 1 or 2, **characterised in that** said resistive layer of the micro-reflectron extends in a plane parallel to a main face of said at least one substrate.

4. System according to one of claims 1 to 3, **characterised in that** the ion beam is emitted by the source (MS1, MS2) in a direction (y) orthogonal to the direction (x) of introduction, into the spectrometer, of the gas coming from the separation module.

5. System according to one of claims 1 to 4, **characterised in that** the spectrometer comprises, between the ion source (MS1, MS2) and the micro-reflectron (R), an ion acceleration zone (MS3).

6. System according to claim 5, **characterised in that** the ion acceleration zone (MS3) and the free-flight zone (MS4) are arranged along a longitudinal wall (R3), i.e. parallel to the direction of the ion beam at the outlet of the source of the micro-reflectron (R), so as to be adjacent.

7. System according to claim 6, **characterized in that** the micro-reflectron (R) comprises a first aperture (R31) communicating with the acceleration zone (MS3) for the entry of ions into the reflectron and a second aperture (R32) communicating with the free-flight zone (MS4) for the exit of ions, said first and second apertures being adjacent in the same wall (R3) of the micro-reflectron.

8. System according to one of claims 5 to 7, **characterised in that** the acceleration zone (MS3) comprises two electrodes (E31, E32) extending parallel to the direction (y) of the ion beam emitted by the source (MS1, MS2), said electrodes being polarisable so as to generate an electrostatic field capable of deflecting the ions in a direction (x) orthogonal to that of the ion beam at the outlet of the source in order to cause said ions to penetrate into the micro-reflectron.

9. A system as claimed in claim 8, **characterised in that** it comprises a pulsed device adapted to bias said electrodes (E31, E32) of the acceleration zone (MS3) so as to cause the accelerated ions to enter the micro-reflectron sequentially.

10. System according to one of claims 1 to 9, **characterised in that** it further comprises a sealed housing coupled to a vacuum pump adapted to apply a negative pressure in said housing, the substrate in the volume of which said spectrometer is arranged being housed in said sealed housing.

11. System according to one of claims 1 to 10, **characterised in that** said at least one chromatography (GC) micro-capillary column is arranged in the volume of at least one substrate.

12. System according to claim 11, **characterised in that** the separation module comprises at least one non-destructive micro- or nano-detector in said at least one micro-capillary chromatography column.

13. System according to one of claims 1 to 12, **characterised in that** the separation module (SEP) comprises at least two micro-capillary gas chromatography columns (GC1, GC2) coupled in series and each comprising a different stationary phase, and a flow modulator for regulating the flow of gas successively through each of the said columns (G1, G2).

14. System according to one of claims 11 or 12, **characterised in that** the separation module comprises at least two gas chromatography micro-capillary columns (GC1, GC2) coupled in series and each comprising a different stationary phase, each of said micro-capillary columns (GC1, GC2) comprising at least two non-destructive micro- or nano-detectors arranged in said columns.

15. System according to one of claims 1 to 14, **characterised in that** it comprises a conduit arranged between the chromatography micro-capillary column and the mass spectrometer (TOFMS) and at least one non-destructive micro- or nano-detector (D) arranged in the said conduit, the said conduit having a cross-section equal to that of the chromatography micro-capillary column so as not to modify the cross-section of passage of the gas.

16. System according to claim 15 in combination with claim 13, **characterised in that** said non-destructive detector is an electromechanical nano-system comprising a resonator and **in that** said detector is arranged in the vacuum housing of the mass spectrometer.

17. System according to one of claims 1 to 16, **characterised in that** it also comprises, upstream of the separation module (SEP), a circuit for preconcentrating the gas to be analysed, comprising a preconcentrator (PREC).

18. Method of manufacturing a gas analysis system according to one of claims 1 to 17, **characterised in that** the manufacture of the mass spectrometer comprises, in at least one substrate, a step of etching a substrate to form at least part of a channel for the ions, a step of depositing a resistive layer in a region of said channel intended to form the micro-reflectron, and a step of forming at least two electrodes to bias said resistive layer so as to create a continuous gradient of electrostatic field in said reflectron.

19. A method as claimed in claim 18, **characterised in that** it comprises cutting said at least one substrate to individualise a chip comprising the mass spectrometer.

20. Process according to one of claims 18 or 19, **characterized in that** it further comprises the manufacture of at least one micro-capillary chromatography column by etching a groove in a substrate, functionalizing the said groove with a stationary phase, and then sealing a cap over the said groove.

21. Method according to claim 20, **characterized in that** the mass spectrometer and the micro-capillary chromatography column are manufactured in separate substrates and **in that** the chromatography column and the mass spectrometer are assembled by gluing the main faces of the substrates in which they are formed, then the said assembled substrates are cut to individualize a chip comprising the micro-capillary chromatography column and the mass spectrometer.

22. Process according to claim 19, **characterized in that** it comprises the manufacture of at least one chromatography column by etching a groove in the substrate in which the ion flight zone of the mass spectrometer is arranged, functionalizing the said groove with a stationary phase and sealing the said substrate with another substrate in order to close the ion flight channel and the micro-capillary chromatography column.
